# EUROPEAN PATENT SPECIFICATION

(11) **EP 4 181 563 B1**
(45) Date of publication and mention of the grant of the patent: **11.12.2024**
(21) Application number: 22216435.2
(22) Date of filing: 25.09.2020
(51) Int. Cl.: H04W 24/10, H04L 65/1069, H04L 65/80

(54) **STREAM INFORMATION MANAGEMENT**
STREAM-INFORMATIONSVERWALTUNG
GESTION D'INFORMATIONS DE FLUX

(30) Priority: 25.09.2019 US 201962905758 P
(43) Date of publication of application: 17.05.2023
(62) Divisional of application: 20198368.1
(73) Proprietor: INTEL Corporation, Santa Clara, CA 95054 (US)
(72) Inventor: CHOU, Joey, Scottsdale, AZ, 85258 (US); YAO, Yizhi, Chandler, AZ, 85248 (US)
(74) Representative: Viering, Jentschura & Partner mbB Patent- und Rechtsanwälte

(56) References cited:
- US-A1- 2019 150 017
- "3rd Generation Partnership Project; Technical Specification Group Services and System Aspects; Telecommunication management; Study on management and orchestration of network slicing for next generation network (Release 15)", 3GPP STANDARD ; TECHNICAL REPORT ; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.0.0, 25 September 2017 (2017-09-25), pages 1 - 78, XP051337191

## Description

### TECHNICAL FIELD

Embodiments pertain to radio access networks. Some embodiments relate to management analytic data use in various radio access technologies (RATs) including cellular and wireless local area network (WLAN) networks, including Third Generation Partnership Project Long Term Evolution (3GPP LTE) networks and LTE advanced (LTE-A) networks as well as 4^{th} generation (4G) networks and 5^{th} generation (5G) networks.

### BACKGROUND

The use of 3GPP LTE systems (including LTE and LTE-Advanced systems) has increased due to both an increase in the types of devices user equipment (UEs) using network resources as well as the amount of data and bandwidth being used by various applications, such as video streaming, operating on these UEs. With the vast increase in number and diversity of communication devices, the corresponding network environment, including routers, switches, bridges, gateways, firewalls, and load balancers, has become increasingly complicated, especially with the advent of next generation (NG) (or new radio (NR)) systems.

To add further complexity to the variety of services provided by the network devices, many physical implementations of the network devices are propriety and may be unable to incorporate new or adjusted physical components to compensate for different network conditions. This has led to the development of Network Function Virtualization (NFV), which may provide a virtualized environment able to provide any network function or service able to be delivered on general purpose computing systems in a data center as software applications called Virtual Network Functions (VNFs) in conjunction with other network functions (NFs). The use of NFV may provide flexibility in configuring network elements, enabling dynamic network optimization and quicker adaptation of new technologies. As NR systems develop, flexibility in determining performance management of such systems, including the use of analysis of raw NF performance data of a mobile network, together with other management data (e.g., alarm information, configuration data, etc.) is desirable.

US 2019 / 0 150 017 A1 discloses a method, wherein an authorized consumer requests a network function (NF) measurement job control service producer to create a measurement job to collect performance data of NFs, wherein the request indicates that the performance data needs to be reported by performance data streaming, wherein the NF measurement job control service producer may enable the authorized consumer to create the measurement job to receive the performance data stream.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1A illustrates an architecture of a network, in accordance with some aspects.
FIG. 1B illustrates a non-roaming 5G system architecture in accordance with some aspects.
FIG. 1C illustrates a non-roaming 5G system architecture in accordance with some aspects.
FIG. 2 illustrates a block diagram of a communication device in accordance with some embodiments.
FIG. 3 illustrates an NFV network management architecture in accordance with some embodiments.
FIG. 4 illustrates an example of NF performance measurements generation in accordance with some embodiments.
FIG. 5 illustrates a performance data streaming service (PDSS) between a PDSS producer and PDSS consumer in accordance with some embodiments.
FIG. 6 illustrates a holistic sequence for performance data streaming in accordance with some embodiments.
FIG. 7 illustrates an example getStreamInfo procedure in accordance with some embodiments.
FIG. 8 illustrates an example addStreamInfo procedure in accordance with some embodiments.
FIG. 9 illustrates an example updateStreamInfo procedure in accordance with some embodiments.
FIG. 10 illustrates an example deleteStreamInfo procedure in accordance with some embodiments.
FIG. 11 illustrates an overview of resources and applicable HTTP methods in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

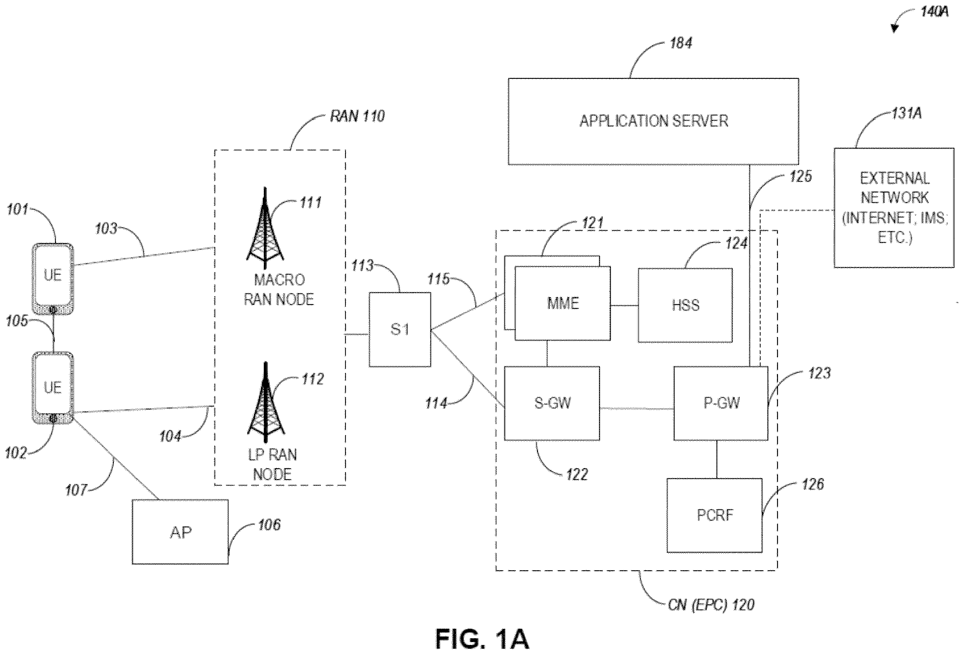

FIG. 1A illustrates an architecture of a network in accordance with some aspects. The network 140A includes 3GPP LTE/4G and NG network functions. A network function can be implemented as a discrete network element on a dedicated hardware, as a software instance running on dedicated hardware, and/or as a virtualized function instantiated on an appropriate platform, e.g., dedicated hardware or a cloud infrastructure.

The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as portable (laptop) or desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard. Any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and other frequencies and Spectrum Access System (SAS) in 3.55-3.7 GHz and other frequencies). Different Single Carrier or OFDM modes (CP-OFDM, SC-FDMA, SC-OFDM, filter bank-based multicarrier (FBMC), OFDMA, etc.), and in particular 3GPP NR, may be used by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network. In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN.

The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink (SL) interface comprising one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), and a Physical Sidelink Feedback Channel (PSFCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a gNB, an eNB, or another type of RAN node.

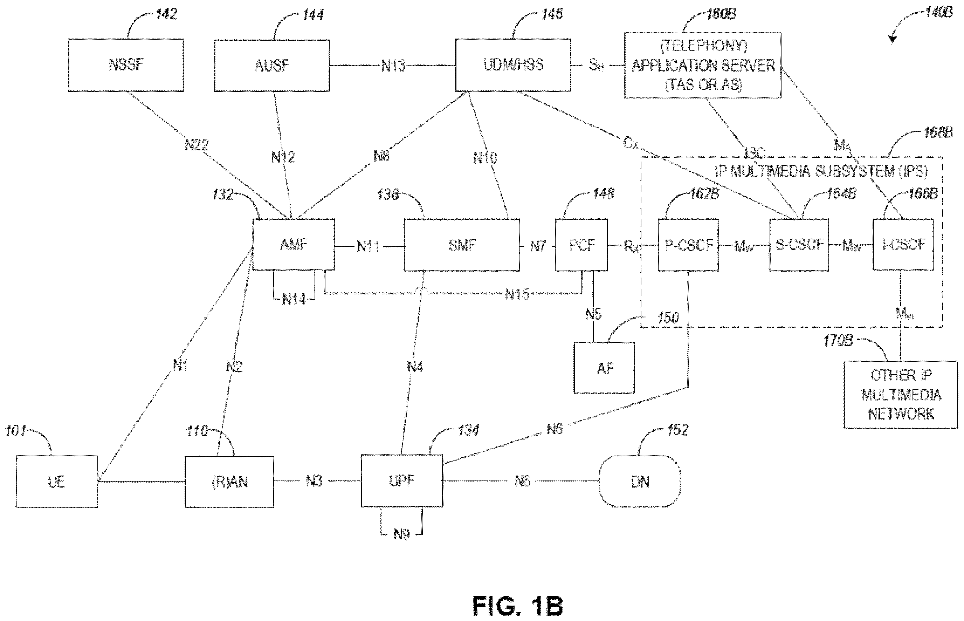

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1C). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network or a 5G network, including 5G new radio network using communications in the licensed (5GNR) and the unlicensed (5GNR-U) spectrum. One of the current enablers of IoT is the narrowband-IoT (NB-IoT). Operation in the unlicensed spectrum may include dual connectivity (DC) operation and the standalone LTE system in the unlicensed spectrum, according to which LTE-based technology solely operates in unlicensed spectrum without the use of an "anchor" in the licensed spectrum, called MulteFire. Further enhanced operation of LTE systems in the licensed as well as unlicensed spectrum is expected in future releases and 5G systems. Such enhanced operations can include techniques for sidelink resource allocation and UE processing behaviors for NR sidelink V2X communications.

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. In particular, FIG. 1B illustrates a 5G system architecture 140B in a reference point representation. More specifically, UE 102 can be in communication with RAN 110 as well as one or more other 5GC network entities. The 5G system architecture 140B includes a plurality of network functions (NFs), such as an AMF 132, session management function (SMF) 136, policy control function (PCF) 148, application function (AF) 150, UPF 134, network slice selection function (NSSF) 142, authentication server function (AUSF) 144, and unified data management (UDM)/home subscriber server (HSS) 146.

The UPF 134 can provide a connection to a data network (DN) 152, which can include, for example, operator services, Internet access, or third-party services. The AMF 132 can be used to manage access control and mobility and can also include network slice selection functionality. The AMF 132 may provide UE-based authentication, authorization, mobility management, etc., and may be independent of the access technologies. The SMF 136 can be configured to set up and manage various sessions according to network policy. The SMF 136 may thus be responsible for session management and allocation of IP addresses to UEs. The SMF 136 may also select and control the UPF 134 for data transfer. The SMF 136 may be associated with a single session of a UE 101 or multiple sessions of the UE 101. This is to say that the UE 101 may have multiple 5G sessions. Different SMFs may be allocated to each session. The use of different SMFs may permit each session to be individually managed. As a consequence, the functionalities of each session may be independent of each other.

The UPF 134 can be deployed in one or more configurations according to the desired service type and may be connected with a data network. The PCF 148 can be configured to provide a policy framework using network slicing, mobility management, and roaming (similar to PCRF in a 4G communication system). The UDM can be configured to store subscriber profiles and data (similar to an HSS in a 4G communication system).

The AF 150 may provide information on the packet flow to the PCF 148 responsible for policy control to support a desired QoS. The PCF 148 may set mobility and session management policies for the UE 101. To this end, the PCF 148 may use the packet flow information to determine the appropriate policies for proper operation of the AMF 132 and SMF 136. The AUSF 144 may store data for UE authentication.

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1E can also be used.

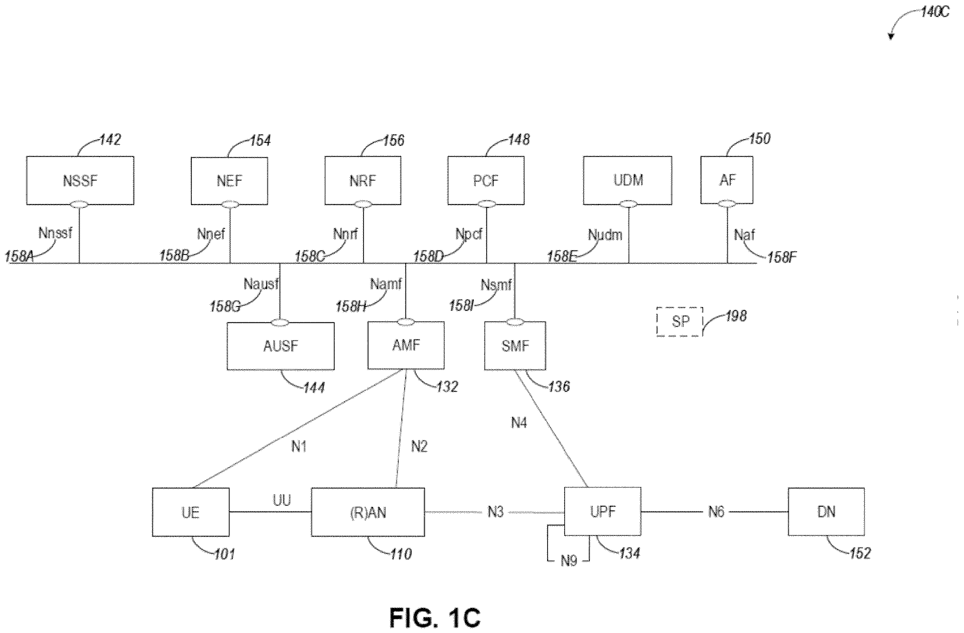

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

NR-V2X architectures may support high-reliability low latency sidelink communications with a variety of traffic patterns, including periodic and aperiodic communications with random packet arrival time and size. Techniques disclosed herein can be used for supporting high reliability in distributed communication systems with dynamic topologies, including sidelink NR V2X communication systems.

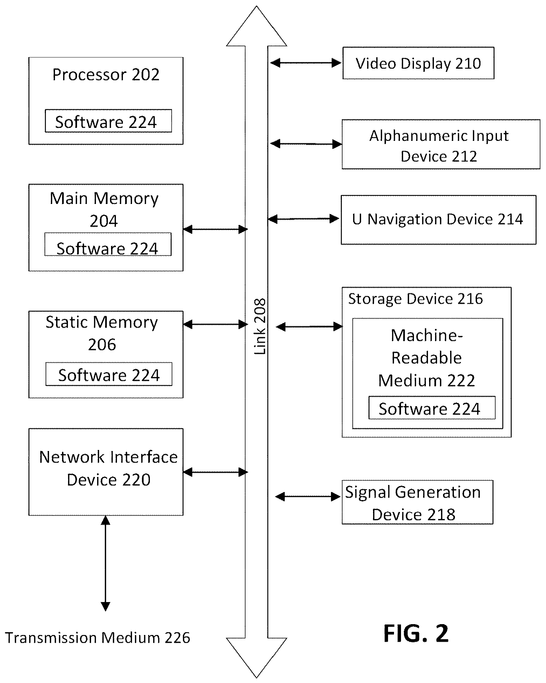

FIG. 2 illustrates a block diagram of a communication device in accordance with some embodiments. The communication device 200 may be a UE such as a specialized computer, a personal or laptop computer (PC), a tablet PC, or a smart phone, dedicated network equipment such as an eNB, a server running software to configure the server to operate as a network device, a virtual device, or any machine capable of executing instructions (sequential or otherwise) that specify actions to be taken by that machine. For example, the communication device 200 may be implemented as one or more of the devices shown in FIG. 1. Note that communications described herein may be encoded before transmission by the transmitting entity (e.g., UE, gNB) for reception by the receiving entity (e.g., gNB, UE) and decoded after reception by the receiving entity.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The communication device 200 may include a hardware processor (or equivalently processing circuitry) 202 (e.g., a central processing unit (CPU), a GPU, a hardware processor core, or any combination thereof), a main memory 204 and a static memory 206, some or all of which may communicate with each other via an interlink (e.g., bus) 208. The main memory 204 may contain any or all of removable storage and non-removable storage, volatile memory or non-volatile memory. The communication device 200 may further include a display unit 210 such as a video display, an alphanumeric input device 212 (e.g., a keyboard), and a user interface (UI) navigation device 214 (e.g., a mouse). In an example, the display unit 210, input device 212 and UI navigation device 214 may be a touch screen display. The communication device 200 may additionally include a storage device (e.g., drive unit) 216, a signal generation device 218 (e.g., a speaker), a network interface device 220, and one or more sensors, such as a global positioning system (GPS) sensor, compass, accelerometer, or other sensor. The communication device 200 may further include an output controller, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a non-transitory machine readable medium 222 (hereinafter simply referred to as machine readable medium) on which is stored one or more sets of data structures or instructions 224 (e.g., software) embodying or utilized by any one or more of the techniques or functions described herein. The instructions 224 may also reside, completely or at least partially, within the main memory 204, within static memory 206, and/or within the hardware processor 202 during execution thereof by the communication device 200. While the machine readable medium 222 is illustrated as a single medium, the term "machine readable medium" may include a single medium or multiple media (e.g., a centralized or distributed database, and/or associated caches and servers) configured to store the one or more instructions 224.

The term "machine readable medium" may include any medium that is capable of storing, encoding, or carrying instructions for execution by the communication device 200 and that cause the communication device 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Radio access Memory (RAM); and CD-ROM and DVD-ROM disks.

The instructions 224 may further be transmitted or received over a communications network using a transmission medium 226 via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks. Communications over the networks may include one or more different protocols, such as Institute of Electrical and Electronics Engineers (IEEE) 802.11 family of standards known as Wi-Fi, IEEE 802.16 family of standards known as WiMax, IEEE 802.15.4 family of standards, a Long Term Evolution (LTE) family of standards, a Universal Mobile Telecommunications System (UMTS) family of standards, peer-to-peer (P2P) networks, a next generation (NG)/5^{th} generation (5G) standards among others. In an example, the network interface device 220 may include one or more physical jacks (e.g., Ethernet, coaxial, or phone jacks) or one or more antennas to connect to the transmission medium 226.

Note that the term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" or "processor" as used herein thus refers to, is part of, or includes circuitry capable of sequentially and automatically carrying out a sequence of arithmetic or logical operations, or recording, storing, and/or transferring digital data. The term "processor circuitry" or "processor" may refer to one or more application processors, one or more baseband processors, a physical central processing unit (CPU), a single- or multi-core processor, and/or any other device capable of executing or otherwise operating computer-executable instructions, such as program code, software modules, and/or functional processes.

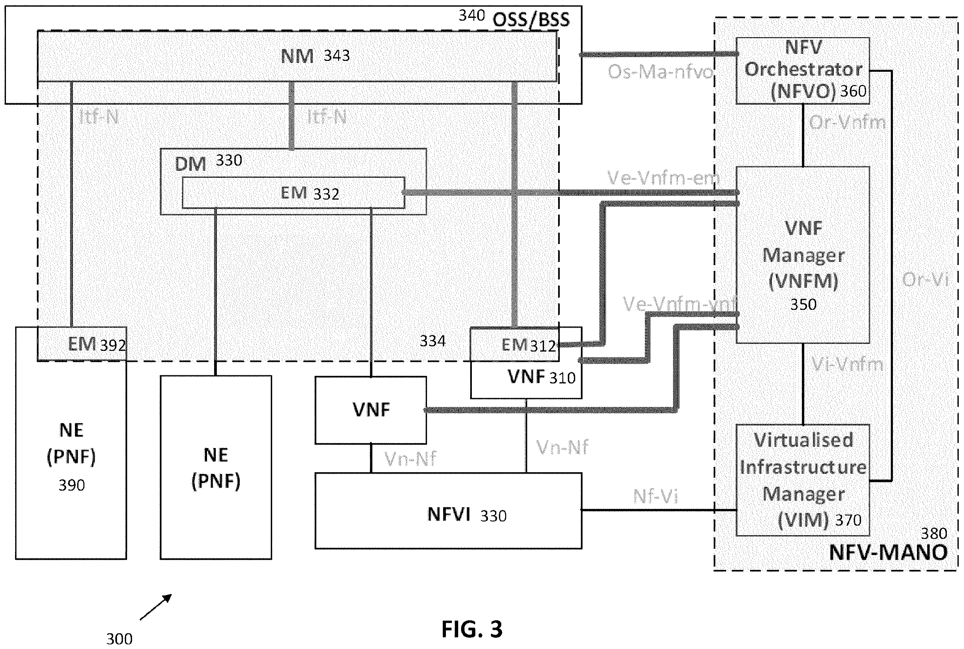

FIG. 3 illustrates an NFV network management architecture in accordance with some embodiments. As illustrated, the NFV network management architecture 300 may include a number of elements (each of which may contain physical and/or virtualized components), including a Network Virtualization Function Infrastructure (NVFI) 310, Network elements (NEs) 390, Virtual Network Functions (VNFs) 320, a Domain Manager (DM) 330, an Element Manager (EM) 332, a Network Manager (NM) 342, and an NFV Management and Orchestration (NFV-MANO) 380. The NFV-MANO 380, which may be replaced as indicated herein by multiple NFV-MANO, may comprise a Virtualized Infrastructure Manager (VIM) 340, a VNF Manager (VNFM) 350, and a Network Function Virtualization Orchestrator (NFVO) 360. The NM 342 may be contained in an Operations Support SystemBusiness Support System (OSS/BSS) 320, with the DM 330 and NM 342 forming the 3GPP management system 314.

The NFV network management architecture 300 may be implemented by, for example, a data center comprising one or more servers in the cloud. The NFV network management architecture 300, in some embodiments, may include one or more physical devices and/or one or more applications hosted on a distributed computing platform, a cloud computing platform, a centralized hardware system, a server, a computing device, and/or an external network-to-network interface device, among others. In some cases, the virtualized resource performance measurement may include, for example, latency, jitter, bandwidth, packet loss, nodal connectivity, compute, network, and/or storage resources, accounting, fault and/or security measurements. In particular, the NEs 390 may comprise physical network functions (PNF) including both hardware such as processors, antennas, amplifiers, transmit and receive chains, as well as software. The VNFs 320 may be instantiated in one or more servers. Each of the VNFs 320, DM 330 and the NEs 390 may contain an EM 322, 332, 392.

The NFV Management and Orchestration (NFV-MANO) 380 may manage the NFVI 310. The NFV-MANO 380 may orchestrate the instantiation of network services, and the allocation of resources used by the VNFs 320. The NFV-MANO 380 may, along with the OSSBSS 340, be used by external entities to deliver various NFV business benefits. The OSSBSS 340 may include the collection of systems and management applications that a service provider may use to operate their business: management of customers, ordering, products and revenues - for example, payment or account transactions, as well as telecommunications network components and supporting processes including network component configuration, network service provisioning and fault handling. The NFV-MANO 380 may create or terminate a VNF 320, increase or decrease the VNF capacity, or update or upgrade software and/or configuration of a VNF. The NFV-MANO 380 may include a Virtualized Infrastructure Manager (VIM) 370, a VNF Manager (VNFM) 350 and a NFV Orchestrator (NFVO) 360. The NFV-MANO 380 may have access to various data repositories including network services, VNFs available, NFV instances and NFVI resources with which to determine resource allocation.

The VIM 370 may control and manage the NFVI resources via Nf-Vi reference points within the infrastructure sub-domain. The VIM 370 may further collect and forward performance measurements and events to the VNFM 350 via Vi-VNFM and to the NFVO 360 via Or-Vi reference points. The NFVO 360 may be responsible for managing new VNFs and other network services, including lifecycle management of different network services, which may include VNF instances, global resource management, validation and authorization of NFVI resource requests and policy management for various network services. The NFVO 360 may coordinate VNFs 320 as part of network services that jointly realize a more complex function, including joint instantiation and configuration, configuring required connections between different VNFs 320, and managing dynamic changes of the configuration. The NFVO 360 may provide this orchestration through an OS-Ma-NFVO reference point with the NM 342. The VNFM 350 may orchestrate NFVI resources via the VIM 370 and provide overall coordination and adaptation for configuration and event reporting between the VIM 320 and the EMs and NMs. The former may involve discovering available services, managing virtualized resource availability/allocation/release and providing virtualized resource fault/performance management. The latter may involve lifecycle management that may include instantiating a VNF, scaling and updating the VNF instances, and terminating the network service, releasing the NFVI resources for the service to the NFVI resource pool to be used by other services.

The VNFM 350 may be responsible for the lifecycle management of the VNFs 320 via the Ve-VNFM-VNF reference point and may interface to EMs 322, 332 through the Ve-VNFM--EM reference point. The VNFM 350 may be assigned the management of a single VNF 320, or the management of multiple VNFs 320 of the same type or of different types. Thus, although only one VNFM 350 is shown in FIG. 3, different VNFMs 350 may be associated with the different VNFs 320 for performance measurement and other responsibilities. The VNFM 350 may provide a number of VNF functionalities, including instantiation (and configuration if required by the VNF deployment template), software update/upgrade, modification, scaling out/in and up/down, collection of NFVI performance measurement results and faults/events information and correlation to VNF instance-related events/faults, healing, termination, lifecycle management change notification, integrity management, and event reporting.

The VIM 370 may be responsible for controlling and managing the NFVI compute, storage and network resources, usually within one operator's Infrastructure Domain. The VIM 370 may be specialized in handling a certain type of NFVI resource (e.g. compute-only, storage-only, networking-only), or may be capable of managing multiple types of NFVI resources. The VIM 370 may, among others, orchestrate the allocation/upgrade/release/reclamation of NFVI resources (including the optimization of such resources usage) and manage the association of the virtualized resources to the physical compute, storage, networking resources, and manage repository inventory-related information of NFVI hardware resources (compute, storage, networking) and software resources (e.g. hypervisors), and discovery of the capabilities and features (e.g. related to usage optimization) of such resources.

The NVFI 310 may itself contain various virtualized and non-virtualized resources. These may include a plurality of virtual machines (VMs) 312 that may provide computational abilities (CPU), one or more memories 314 that may provide storage at either block or file-system level and one or more networking elements 316 that may include networks, subnets, ports, addresses, links and forwarding rules to ensure intra- and inter-VNF connectivity.

Each VNF 320 may provide a network function that is decoupled from infrastructure resources (computational resources, networking resources, memory) used to provide the network function. Although not shown, the VNFs 320 can be chained with other VNFs 320 and/or other physical network function to realize a network service. The virtualized resources may provide the VNFs 320 with desired resources. Resource allocation in the NFVI 310 may simultaneously meet numerous requirements and constraints, such as low latency or high bandwidth links to other communication endpoints.

The VNFs 320, like the NEs 390 may be managed by one or more EMs 322, 332, 392. The EM may provide functions for management of virtual or physical network elements, depending on the instantiation. The EM may manage individual network elements and network elements of a sub-network, which may include relations between the network elements. For example, the EM 322 of a VNF 320 may be responsible for configuration for the network functions provided by a VNF 320, fault management for the network functions provided by the VNF 320, accounting for the usage of VNF functions, and collecting performance measurement results for the functions provided by the VNF 320.

The EMs 322, 332, 392 (whether in a VNF 320 or NE 390) may be managed by the NM 342 of the OSS/BSS 340 through Itf-N reference points. The NM 342 may provide functions with the responsibility for the management of a network, mainly as supported by the EM 332 but may also involve direct access to the network elements. The NM 342 may connect and disconnect VNF external interfaces to physical network function interfaces at the request of the NFVO 360.

As above, the various components of the system may be connected through different reference points. The references points between the NFV-MANO 380 and the functional blocks of the system may include an Os-Ma-NFVO between the NM 342 and NFVO 360, a Ve-VNFM-EM between the EM 322, 332 and the VNFM 350, a Ve-VNFM-VNF between a VNF 320 and the VNFM 350, a Nf-Vi between the NFVI 310 and the VIM 370, an Or-VNFM between the NFVO 360 and the VNFM 350, an Or-Vi between the NFVO 360 and the VIM 370, and a Vi-VNFM between the VIM 370 and the VNFM 350. An Or-Vi interface may implement the VNF software image management interface and interfaces for the management of virtualized resources, their catalogue, performance and failure on the Or-Vi reference point. An Or-Vnfm interface may implement a virtualized resource management interface on the Or-Vnfm reference point. A Ve-Vnfm interface may implement a virtualized resource performance/fault management on the Ve-Vnfm reference point.

As above, with the advent of 5G networks and disparate devices (such as Machine Type Communication (MTC), enhanced Mobile Broadband (eMBB) and Ultra-Reliable and Low Latency Communications (URLLC) devices) using these networks, network management and network slicing is evolving towards a service based architecture in which virtualization is used.

Network slicing is a form of virtualization that allows multiple virtual networks to run on top of a common shared physical network infrastructure. Network slicing serves service requirements by providing isolation between network resources, as well as permitting an optimized topology and specific configuration to be developed for each Network Slice Instance (NSI). The different parts of an NSI may be grouped as Network Slice Subnets that allow the lifecycle of a Network Slice Subnet Instance (NSSI) to be managed independently from the lifecycle of an NSI. The NSSIs may be implemented as different core networks, such RAN and 5GC.

Some of the above services have ultra-low latency, high data capacity, and strict reliability requirements, as any faults or performance issues in the networks can cause service failure, which may result in property damage and body injury. Therefore, it may be beneficial to collect real-time performance data that can be used by analytic applications (e.g., network optimization, self-organizing network (SON), etc.) to detect the potential issues in advance, and take appropriate actions to prevent or mitigate issues. Multiple analytic applications are capable of consuming performance data for specific purposes.

As above, the raw performance data of NFs of a mobile network can be analyzed, alone or together with other management data (e.g., alarm information, configuration data, etc.), and formed into one or more management analytical data for NFs, sub-networks, NSSIs or NSIs. The management analytical data can be used to diagnose ongoing issues impacting the performance of the mobile network and predict any potential issues (e.g., potential failure and/or performance degradation). For example, the analysis of NSI/NSSI resource usage can form a management analytical data indicating whether a certain resource is deteriorating. The analysis and correlation of the overall performance data of mobile network may indicate overload situation and potential failure(s).

SON Capacity and Coverage Optimization (CCO) is a typical case that may consume the management analytical data. CCO provides optimal coverage and capacity for the E-UTRAN (see e.g., clause 4.5 of 3GPP TS 28.628), which may also be applicable for 5G radio networks. The management analytical data related to coverage and capacity help the SON CCO to realize the situation of coverage and capacity or interference, and to trigger corresponding optimization if desired. The PM for 5G networks and network slicing includes the management services listed in table 4.3-1.

**Table 4.3-1: PM services for 5G networks and network slicing**

| **Management Service** | **Description** |
|---|---|
| Measurement job control service for NF | The management service for creating, terminating and querying the measurement job(s) for the NF(s). |
| Performance data file reporting service for NF | The management service for reporting the NF performance data file. |
| Performance data streaming service for NF | The management service for reporting the NF performance data steam. |
| Measurement job control service for NSSI | The management service for creating, terminating and querying the measurement job(s) for the NSSI(s). |
| Performance data file reporting service for NSSI | The management service for reporting the NSSI performance data file. |
| Performance data streaming service for NSSI | The management service for reporting the NSSI performance data stream. |
| Measurement job control service for NSI | The management service for creating, terminating and querying the measurement job(s) for the NSI(s). |
| Performance data file reporting service for NSI | The management service for reporting the NSI performance data file. |
| Performance data streaming service for NSI | The management service for reporting the NSI performance data stream. |
| Measurement job control service for network/sub-network | The management service for creating, terminating and querying the measurement job(s) for the network(s)/subnetwork(s). The measurement job for the network(s)/subnetwork(s) is to collect the network/subnetwork performance data that are not specific to network slicing. |
| Performance data file reporting service for network/sub-network | The management service for reporting the file of the network/subnetwork performance data that is not specific to network slicing. |
| Performance data streaming service for network/sub-network | The management service for reporting the stream of the network/subnetwork performance data that is not specific to network slicing. |

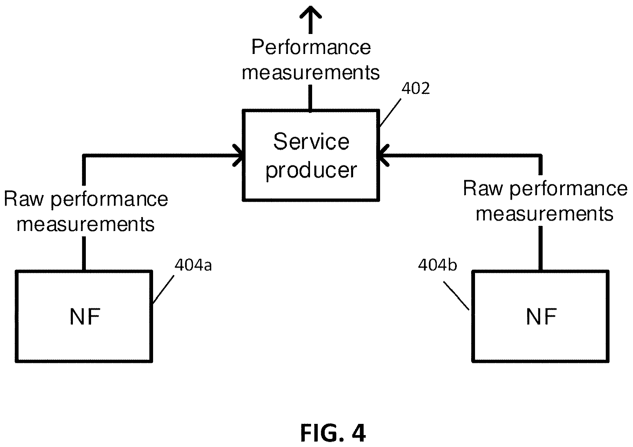

FIG. 4 shows an example of NF performance measurements generation in accordance with some embodiments. In FIG. 4, a service producer 402 collects raw performance measurements from one or more NFs 404a, 404b, and generates the performance measurements (or performance indicators) for the one or more NFs 404a, 404b, which are then provided to service consumers. The one or more NFs 404a, 404b may be part of a group of NFs or an NF Set. The performance measurements may be used to generate or derive performance data, which may be referred to as "performance indicators." The performance indicators may be aggregated over the group of NFs and derived from the performance measurements from the NFs 404a, 404b according to an aggregation method identified in a performance Indicator definition.

Performance Indicators (PIs) are the performance data aggregated over a group of NFs. PIs include, for example, average latency along the NSI. The PIs can be derived from the performance measurements collected at the NFs that belong to the group. The aggregation method is identified in the PI definition. PIs at the NSSI level can be derived from the performance measurements collected at the NFs that belong to the NSSI or to the constituent NSSIs. The PIs at the NSSI level can be made available via the corresponding performance management service for NSSI. The PIs at the NSI level, can be derived from the NSSI level PIs collected at the constituent NSSIs and/or NFs. The NSI level PIs can be made available via the corresponding performance management service for NSI.

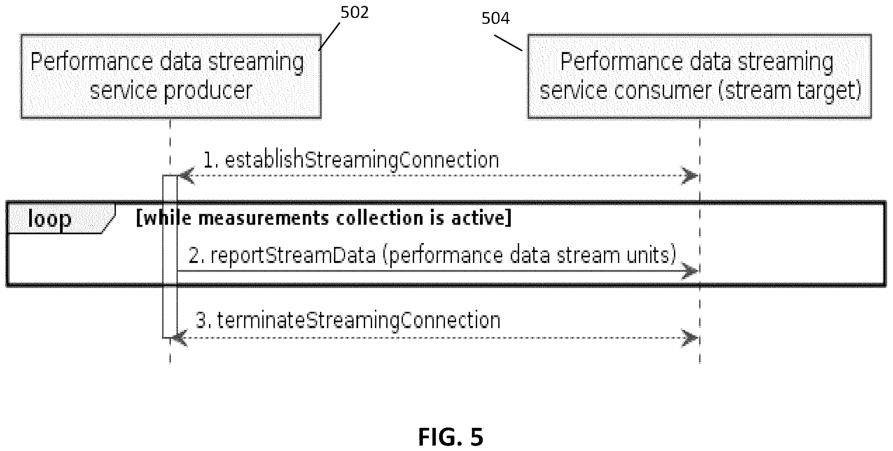

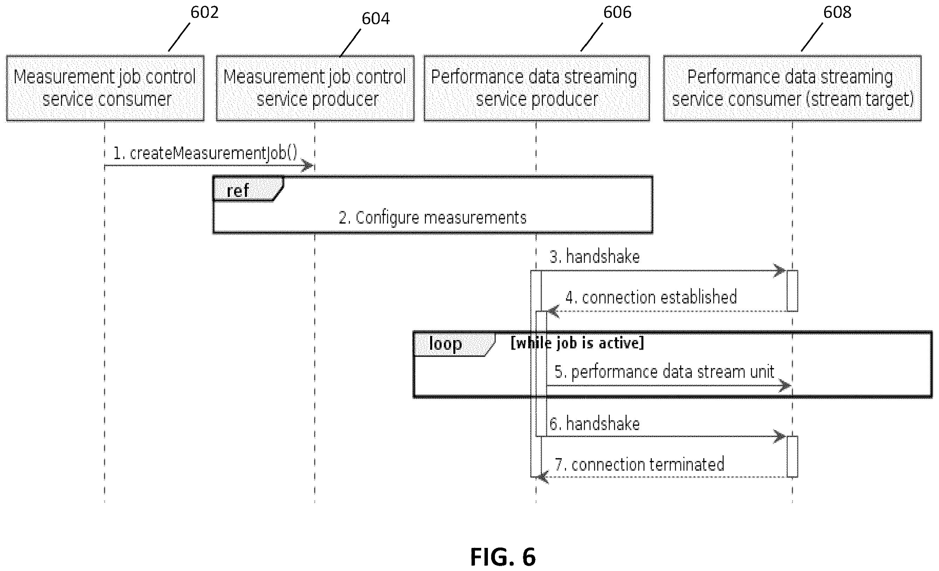

FIG. 5 illustrates a performance data streaming service (PDSS) between a PDSS producer and PDSS consumer in accordance with some embodiments. FIG. 6 illustrates a holistic sequence for performance data streaming in accordance with some embodiments. Some aspects of PDSS not described herein are provided in 3GPP TS 28.550 and TS 28.532. As shown in FIG. 5, the list of stream information (StreamlnfoList parameter) is provided by a PDSS producer 502 to a PDSS consumer 504 when establishing the streaming connection, as is shown by operation 1 (establishStreamingConnection operation). The PDSS producer 502 and PDSS consumer 504 may be implemented as part of an NF (e.g., gNB), or in a centralized system managing multiple NFs, or an entity outside an NF (e.g., an application).

This operation supports the PDSS producer 606 to establish streaming connection with the PDSS consumer (e.g., stream target) 608, as illustrated in FIG. 6. In operation 2 in FIG. 5, the performance data stream units may be reported from the PDSS producer 502 to the PDSS consumer 504. One connection supports one or more streams, and the information about the supported streams are sent from the PDSS producer 502 to the PDSS consumer 504 (stream target) during the connection establishment. If the streaming connection is successfully established, the PDSS producer 502 sends Performance Data Stream Units (see table C-1) to the PDSS consumer 504 on this connection according to the information of the supported streams when the performance data is ready for each granularity period.

Table C-1 lists all the Performance Data Stream Unit content items. Table C-1 also provides an explanation of the individual items.

**Table C-1: Performance Data Stream Unit content description**

| **Performance Data Stream Unit Content** | **Description** |
|---|---|
| streamId | The streamId of the performance data stream. |
| granularityPeriodEndTime | Time stamp referring to the end of the granularity period. |
| measResults | This parameter contains the sequence of result values for the observed measurement types. |
| | The "measResults" sequence shall have the same number of elements, which follow the same order as the measurement types presented in "measTypes" for the subject stream in the output parameter streamInfoList of the establishStreamingConnection operation (see clause 6.2.1.2 of 3GPP TS 28.550). |

The list of stream information (streamInfoList) is used by the PDSS consumer 504 to parse the streamed performance data received from the performance data streaming service producer 502. The establishStreamingConnection operation has two input parameters including producerReference and streamInfoList. The producerReference is a reference of the PDSS producer who requests to establish the streaming connection. The streamInfoList contains the information on the performance data streams including a streamId (a unique identifier (ID) of the stream between the PDSS producer and the stream target); measObjDn (the domain name (DN) of the measured object instance); and measTypes (a list of measurement type whose measurement result values are to be reported by the Performance Data Stream Units via this stream). The measurement result values are reported following the sequence of the measurement types as presented in the 'measTypes' parameter. See e.g., clause 6.1.1.3 of 3GPP TS 28.550.

After the reporting, the streaming connection may be terminated, as shown in operation 3.

The holistic sequence for performance data streaming in FIG. 6 starts from measurement job creation (operation 1), using a createMeasurementjob request sent from a measurement job control service consumer 602 to a measurement job control service producer 604. In response, the measurement job control service producer 604 at operation 2 communicates with the PDSS producer 606 to configure the measurements indicated by the createMeasurementjob request. The PDSS producer 606 initiates a handshake with the PDSS consumer 608 at operation 3, which responds with a connection established message at operation 4. While the job remains active, the PDSS producer 606 sends the performance data in stream units at operation 5, until the PDSS producer 606 again initiates another handshake with the PDSS consumer 608 at operation 6, at which point the connection between the PDSS producer 606 and the PDSS consumer 608 is terminated at operation 7.

Thus, the PDSS producer 606 establishes a connection to the PDSS consumer 608 by exchanging meta-data (PDSS producer 606 informs PDSS consumer 608 about its own identity and the nature of the data to be reported via streaming) phase and the actual connection (a data pipe for streaming) establishment. The established connection supports stream multiplexing (one connection supports one or more reporting streams simultaneously). Upon successful connection establishment, the PDSS consumer 608 is aware of the PDSS producer 606 identity, the list of reporting streams and the nature of data being reported on each of the streams.

However, the stream information may be added, updated or deleted, for example, for instance when new measurement jobs (or collections by configuration) are created, when the measurement types to be reported by the stream are changed, or when the measurement job (or collection by configuration) is stopped. Furthermore, the PDSS producer (or another entity actually uses the stream data) may also retrieve the stream information to synchronize the stream information to ensure that the stream information is up-to-date. Therefore, the PDSS producer is able to add, update and delete the stream information to the PDSS consumer.

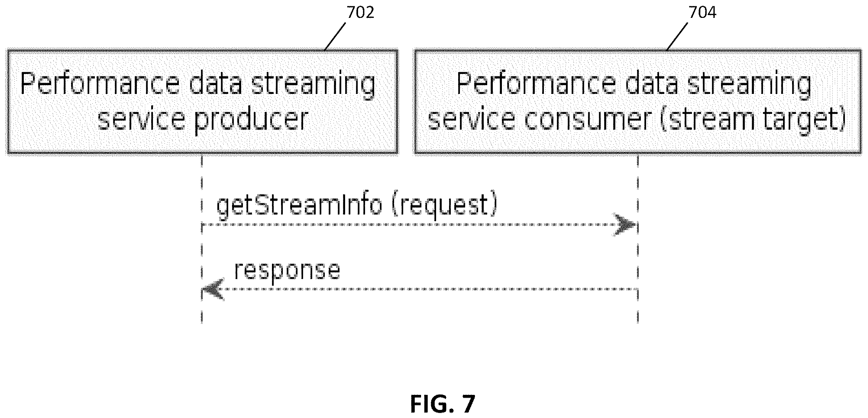

Operations to get, add, update and delete stream information by the PDSS producer to the PDSS consumer are also disclosed herein. Each operation may include a connectionId input parameter that identifies the streaming connection to which reporting streams are being added/updated/ deleted. Each of the operations may contain other input parameters, output parameters and/or exceptions. The PDSS supports near-real time performance data reporting, which enables data analytics. The embodiments herein improve the performance of PDSS. FIG. 7 illustrates an example getStreamInfo (or getStream) procedure in accordance with some embodiments. In FIG, 7, the PDSS producer 702 sends a get Stream Info request to the PDSS stream target (PDSS consumer) 704 and receives a response from the stream target 704.

The PDSS producer 702 (or another authorized entity) may get the information for one or more streams from the streaming consumer (e.g., stream target) 704. The input and output parameters, as well as exceptions to the request are described in Tables 6.2.w.2, 6.2.w.3 and 6.2.w.4, respectively.

### 6.2.w.2Input parameters

| **Parameter Name** | **Qualifier** | **Information type** | **Comment** |
|---|---|---|---|
| streamIdList | M | List of streamId | It provides the list of the streamid for which the stream information to be returned. |
| | | | The empty list indicates the stream information for all streams are to be returned. |

### 6.2.w.3 Output parameters

| **Parameter Name** | **Qualifier** | **Matching Information** | **Comment** |
|---|---|---|---|
| listOfStreamInfoOut | M | List of < streamld, measObjDn, measTypes, > | It provides the list of the stream information successfully returned. |
| | | | The stream information contains the following information: |
| | | | - streamld: unique identifier of the stream to add; |
| | | | - measObjDn: the DN of the measured object instance; |
| | | | - measTypes: a list of measurement type. |
| status | M | ENUM (Success, Failure, PartialSuccess) | An operation may fail or partially fail because of a specified or unspecified reason. |

### 6.2.w.4 Exceptions

| **Exception Name** | **Definition** |
|---|---|
| UnknownstreamIds | **Condition:** One or more of streamld in the streamldList are unknown. |
| | **Returned Information:** Name of the exception; status is set to 'Failure' or 'PartialSuccess'. |

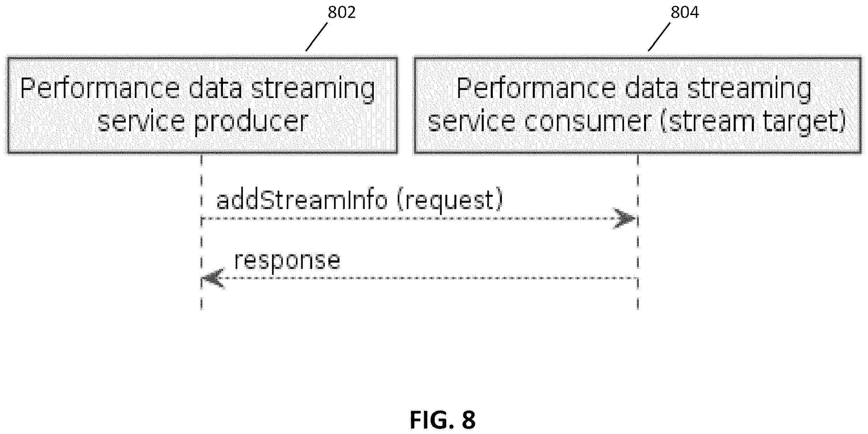

FIG. 8 illustrates an example addStreamInfo (also called addStream) procedure in accordance with some embodiments. In FIG. 8, the PDSS producer 802 sends an addStreamInfo request to the PDSS stream target (PDSS consumer) 804 to add the information for one or more new streams. The PDSS producer 802 receives a response from the stream target 804. Various aspects of this procedure are discussed in the following sections. The input and output parameters, as well as exceptions to the request are described in Tables 6.2.x.2, 6.2.x.3 and 6.2.x.4, respectively.

### 6.2.x.2 Input parameters

| **Parameter Name** | **Qualifier** | **Information type** | **Comment** |
|---|---|---|---|
| listOfStreamInfoToAdd | M | List of < streamld, measObjDn, measTypes, > | It provides the list of the stream information to be added. |
| | | | The stream information contains the following information: |
| | | | - streamld: unique identifier of the stream to add; |
| | | | - measObjDn: the DN of the measured object instance; |
| | | | - measTypes: a list of measurement type whose measurement result values are to be reported by the Performance Data Stream Units via this stream. The measurement result values shall be reported following the sequence of the measurement types as presented in the 'measTypes' parameter. |

### • 6.2.x.3 Output parameters

| **Parameter Name** | **Qualifier** | **Matching Information** | **Comment** |
|---|---|---|---|
| listOfStreamInfoAdded | M | List of < streamId, measObjDn, measTypes, > | It provides the list of the stream information successfully added. |
| | | | The stream information contains the following information: |
| | | | - streamld: unique identifier of the stream to add; |
| | | | - measObjDn: the DN of the measured object instance; |
| | | | - measTypes: a list of measurement type whose measurement result values are to be reported by the Performance Data Stream Units via this stream. The measurement result values shall be reported following the sequence of the measurement types as presented in the 'measTypes' parameter. |
| status | M | ENUM (Success, Failure, PartialSuccess) | An operation may fail or partially fail because of a specified or unspecified reason. |

### • 6.2.x.4 Exceptions

| **Exception Name** | **Definition** |
|---|---|
| streamIdsAleadyExist | **Condition:** One or more of streamld in the listOfStreamInfoToAdd already exist in the streamInfoList. |
| | **Returned Information:** Name of the exception; status is set to 'Failure' or 'PartialSuccess'. |

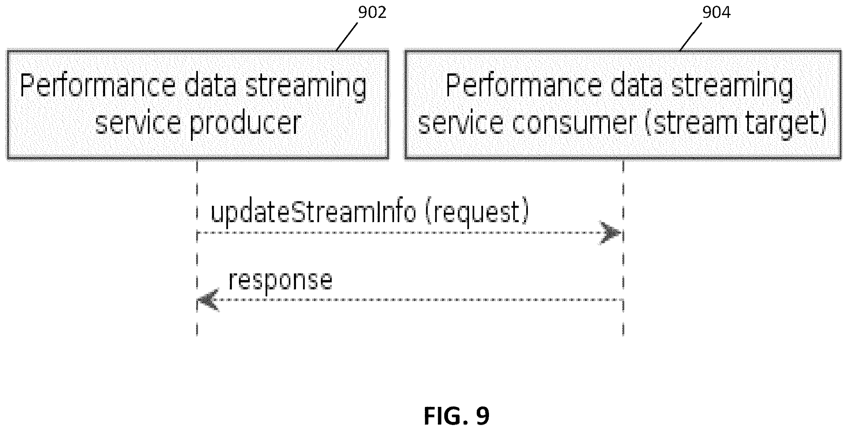

FIG. 9 illustrates an example updateStreamInfo procedure in accordance with some embodiments. As shown in FIG. 9, the PDSS producer 902 sends a updateStreamInfo request to the PDSS stream target (PDSS consumer) 904 to update the information for one or more streams. The PDSS producer 902 receives a response from the stream target 904. Various aspects of this procedure are discussed in the following sections. The input and output parameters, as well as exceptions to the request are described in Tables 6.2.y.2, 6.2.y.3 and 6.2.y.4, respectively.

### • 6.2.y.2 Input parameters

| **Parameter Name** | **Qualifier** | **Information type** | **Comment** |
|---|---|---|---|
| streamldList | M | List of streamld | It provides the list of the streamid for which the stream information is to update. |
| listOfStreamInfoToUp date | M | List of < measObjDn, measTypes, > | The list of stream information to be updated. It shall have the same number of entries as streamldList parameter in this operation. The measObjDn: the updated DN of the measured object instance. Empty value means no update on this parameter. |
| | | | The measTypes: the updated list of measurement type whose measurement result values are to be reported by the Performance Data Stream Units via this stream. The measurement result values shall be reported following the sequence of the measurement types as presented in the 'measTypes' parameter. Empty value means no update on this parameter. |
| | | | At least one of the measObjDn and measTypes shall be non-empty. |

### • 6.2.y.3 Output parameters

| **Parameter Name** | **Qualifier** | **Matching Information** | **Comment** |
|---|---|---|---|
| listOfStreamInfoUpdat ed | M | List of < streamId, measObjDn, measTypes, > | It provides the list of the stream information successfully updated. |
| | | | The stream information contains the following information: |
| | | | - streamId: unique identifier of the stream to add; |
| | | | - measObjDn: the DN of the measured object instance; |
| | | | - measTypes: a list of measurement type. |
| status | M | ENUM (Success, Failure, PartialSuccess) | An operation may fail or partially fail because of a specified or unspecified reason. |

### • 6.2.y.4 Exceptions

| **Exception Name** | **Definition** |
|---|---|
| unknownStreamIds | **Condition:** One or more streamld are unknown by the consumer. |
| | **Returned Information:** Name of the exception; status is set to 'Failure' or "PartialSuccess". |

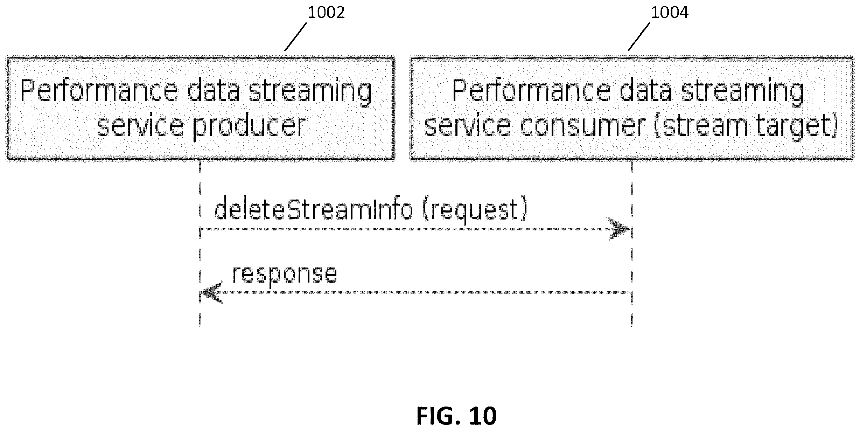

FIG. 10 illustrates an example deleteStreamInfo (or deleteStream) procedure in accordance with some embodiments. As shown in FIG. 10, the PDSS producer 1002 sends a deleteStreamInfo request to the PDSS stream target (PDSS consumer) 1004 to delete the information for a stream. The PDSS producer 1002 receives a response from the stream target 1004. Various aspects of this procedure are discussed in the following sections. The input and output parameters, as well as exceptions to the request are described in Tables 6.2.z.2, 6.2.z.3 and 6.2.z.4, respectively.

### • 6.2.z.2 Input parameters

| **Parameter Name** | **Qualifier** | **Information type** | **Comment** |
|---|---|---|---|
| streamId | M | Integer | The unique identifier of the stream for which the information is to update. |

### • 6.2.z.3 Output parameters

| **Parameter Name** | **Qualifier** | **Matching Information** | **Comment** |
|---|---|---|---|
| status | M | ENUM (Success, Failure) | An operation may fail because of a specified or unspecified reason. |

### • 6.2.z.4 Exceptions

| **Exception Name** | **Definiton** |
|---|---|
| unknownStreamId | **Condition:** The streamId is unknown by the consumer. |
| | **Returned Information:** Name of the exception; status is set to 'Failure'. |

The IS operations are mapped to SS equivalents according to table 9.2.1-1.

**Table 9.2.1-1: Mapping of IS operations to SS equivalents**

| **IS operation** | **Method/frame** | **Qualifier** |
|---|---|---|
| establishStreamingConnection | HTTP POST (see NOTE) | M |
| | HTTP GET (Upgrade, see NOTE) | M |
| terminateStreamingConnection | WebSocket Close frame sent (frame with opcode of 0x8), and | M |
| | WebSocket Close frame received (frame with opcode of 0x8 for successful case) | |
| reportStreamData | WebSocket Data frame sent (frame with opcode of 0x2) | M |
| addStreamInfo | HTTP GET | M |
| updateStreamInfo | HTTP PATCH | M |
| deleteStreamlnfo | HTTP DELETE | M |
| deleteStreamlnfo | HTTP DELETE | M |
| Note: the establishStreamingConnection is mapped to a HTTP POST operation followed by a HTTP GET operation. The HTTP POST operation is to send the information in StreamInfoList parameter to the consumer, and the HTTP GET (Upgrade) operation is to establish the WebSocket connection. | | |

The IS operations for operation "getStreamInfo" are mapped to SS equivalents according to table 9.2.w-1 and table 9.2.w-2.

**Table 9.2.w-1: Mapping of IS operation input parameters to SS equivalents (HTTP GET)**

| **IS operation parameter name** | **SS parameter location** | **SS parameter name** | **SS parameter type** | **Qualifier** |
|---|---|---|---|---|
| streamIdList | Path query | /streamInfoList/ {streamId} streamldList | streamId: string array(string) | M |

**Table 9.2.w-2: Mapping of IS operation output parameters to SS equivalents (HTTP GET)**

| **IS operation parameter name** | **SS parameter location** | **SS parameter name** | **SS parameter type** | **Qualifier** |
|---|---|---|---|---|
| listOfStreamInfoOut | response body | streamInfoOut, listOfStreamInfoOut | streamInfoRetrieval-ResponseType, listOfStreamInfoRetrieval-ResponseType, | M |
| status | response status codes | n/a | n/a | M |
| | | error | error-ResponseType | |
| | response body | | | |

The IS operations for operation "addStreamInfo" are mapped to SS equivalents according to table 9.2.x-1 and table 9.2.x-2.

**Table 9.2.x-1: Mapping of IS operation input parameters to SS equivalents (HTTP POST)**

| **IS operation parameter name** | **SS parameter location** | **SS parameter name** | **SS parameter type** | **Qualifier** |
|---|---|---|---|---|
| ListOfStreamInfoToAdd | request body | streamInfoList | streamInfoListPost-RequestType | M |

**Table 9.2.x-2: Mapping of IS operation output parameters to SS equivalents (HTTP POST)**

| **IS operation parameter name** | **SS parameter location** | **SS parameter name** | **SS parameter type** | **Qualifier** |
|---|---|---|---|---|
| listOfStreamInfoAdded | response body | ListOfStreamInfoPosted | streamInfoListPost-ResponseType | |
| status | response status codes | n/a | n/a | M |
| | | error | error-ResponseType | |
| | response body | | | |

The IS operations for operation "updateStreamInfo" are mapped to SS equivalents according to table 9.2.y-1 and table 9.2.y-2.

**Table 9.2.y-1: Mapping of IS operation input parameters to SS equivalents (HTTP PATCH)**

| **IS operation parameter name** | **SS paramete r location** | **SS parameter name** | **SS parameter type** | **Qualifie r** |
|---|---|---|---|---|
| streamIdList | path, query | /streamInfoList/ {stream Id} streamIdList | streamId: string array(string) | M |
| listOfStreamInfoToUpd ate | request body | streamInfoToUpdate, listOfStreamInfoToUpd ate | streamInfoToUpdate-RequestType, listOfStreamInfoToUpda te-RequestType, | M |

**Table 9.2.y-2: Mapping of IS operation output parameters to SS equivalents (HTTP PATCH)**

| **IS operation parameter name** | **SS paramete r location** | **SS parameter name** | **SS parameter type** | **Qualifie r** |
|---|---|---|---|---|
| listOfStreamInfoUpdate d | response body | streamInfoUpdated listOfStreamInfoUpdate d | streamInfoUpdate-ResponseType, listOfStreamInfoUpdat e-ResponseType, | M |
| status | response status codes | n/a | n/a | M |
| | | error | error-Response Type | |
| | response body | | | |

The IS operations for operation "deleteStreamInfo" are mapped to SS equivalents according to table 9.2.z-1 and table 9.2.z-2.

**Table 9.2.z-1: Mapping of IS operation input parameters to SS equivalents (HTTP DELETE)**

| **IS operation parameter name** | **SS parameter location** | **SS parameter name** | **SS parameter type** | **Qualifier** |
|---|---|---|---|---|
| streamId | path | /streamInfoList/ {streamId} | streamId: string | M |

**Table 9.2.z-2: Mapping of IS operation output parameters to SS equivalents (HTTP DELETE)**

| **IS operation parameter name** | **SS parameter location** | **SS parameter name** | **SS parameter type** | **Qualifier** |
|---|---|---|---|---|
| status | response status codes | n/a error | n/a error-ResponseType | M |
| | response body | | | |

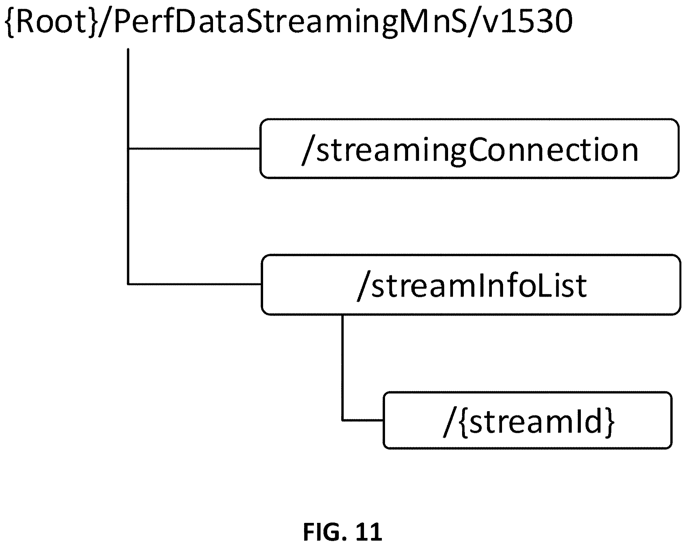

FIG. 11 illustrates an overview of resources and applicable HTTP methods in accordance with some embodiments. The resource structure is of the performance data streaming service. Table 9.3.1-1 provides an overview of the resources and applicable HTTP methods for a RESTful Application Programming Interface (API).

**Table 9.3.1-1: Resources and methods overview**

| **Resource name** | **Resource URI** | **HTTP method** | **Description** |
|---|---|---|---|
| streamInfoList | /streamInfoList | POST | Send the information about the streams to the consumer. |
| streamInfo | /streamInfoList/{streamId} | PATCH | Update the stream information |
| | | DELETE | Delete the stream information |
| streamingConnection | /streamingConnection | GET (Upgrade) | Establish the WebSocket connection. |

### 9.3.2 Resource definitions

### 9.3.2.1 Resource "/streamInfoList"

### 9.3.2.1.1 Description

This resource represents a set of information about the streams.

### 9.3.2.1.2 URI

Resource URI = http://{streamTarget}/PerfDataStreamingMnS/v1530/streamInfoList The resource URI variables a defined in the following table.

**Table 9.3.2.1.2-1: URI variables**

| **Name** | **Definition** |
|---|---|
| stream Target | The "streamTarget" part corresponds to the streamTarget parameter provided in the createMeasurementJob operation (see clause 6.1.1.2) or the streamTarget attribute of the MOI of MeasurementControlor MeasurementReader, see 3GPP TS 28.622). |

### 9.3.2.1.3 HTTP methods

### 9.3.2.1.3.1 HTTP POST

This method shall support the URI query parameters specified in the following table.

**Table 9.3.2.1.3.1-1: URI query parameters supported bv the POST method on this resource**

| **Name** | **Data type** | **Description** | **SQ** |
|---|---|---|---|
| | | | |

This method shall support the request data structures, the response data structures and response codes specified in the following table.

**Table 9.3.2.1.3.1-2: Data structures supported by the POST request body on this resource**

| **Data type** | **Description** | **SQ** |
|---|---|---|
| streamInfoListPost-RequestType | The resource representation of the set of information about streams to be posted. | M |

**Table 9.3.2.1.3.1-3: Data structures supported by the POST Response Body on this resource**

| **Data type** | **Response codes** | **Description** | **SQ** |
|---|---|---|---|
| streamInfoListPost-ResponseType | 201 Posted | In case of success the representation of the posted streamInfoList is returned. | M |
| | 202 Partially posted | In case of partial success the representation of the posted streamInfoList is returned. | |
| error-ResponseTvpe | 4xx/5xx | Returned in case of an error | M |

### 9.3.2.1.3.x HTTP GET

This method shall support the URI query parameters specified in the following table.

**Table 9.3.2.1.3.x-1: URI query parameters supported by the GET method on this resource**

| **Name** | **Data type** | **Description** | **SQ** |
|---|---|---|---|
| streamIdList | array(string) | The list of streamId for which the stream information are to be returned. | |

This method shall support the request data structures, the response data structures and response codes specified in the following table.

**Table 9.3.2.1.3.x-2: Data structures supported by the GET request body on this resource**

| **Data type** | **Description** | **SQ** |
|---|---|---|
| n/a | n/a | n/a |

**Table 9.3.2.1.3.x-3: Data structures supported by the GET Response Body on this resource**

| **Data type** | **Response codes** | **Description** | **SQ** |
|---|---|---|---|
| listOfStreamInfoRetrieval-ResponseType | 200 OK | In case of success the representation of the retrieved streamInfoList is returned. | M |
| | 202 Partially retrieved | In case of partial success the representation of the retrieved streamInfoList is returned. | M |
| error-ResponseType | 4xx/5xx | Returned in case of an error | M |

### 9.3.2.1.3.y HTTP PATCH

This method shall support the URI query parameters specified in the following table.

**Table 9.3.2.1.3.y-1: URI query parameters supported by the PATCH method on this resource**

| **Name** | **Data type** | **Description** | **SQ** |
|---|---|---|---|
| streamIdList | array(string) | The list of streamId for which the stream information are to be updated. | |

This method shall support the request data structures, the response data structures and response codes specified in the following table.

**Table 9.3.2.1.3.y-2: Data structures supported by the PATCH request body on this resource**

| **Data type** | **Description** | **SQ** |
|---|---|---|
| listOfStreamInfoToUpdate-RequestType | The information of the streams identified by the streamIdList parameter in the "query" field to be updated. | M |

**Table 9.3.2.1.3.2-y: Data structures supported by the PATCH Response Body on this resource**

| **Data type** | **Response codes** | **Description** | **SQ** |
|---|---|---|---|
| listOfStreamInfoUpdate-ResponseType | 200 OK | In case of success the representation of the updated streamInfoList is returned. | M |
| | 200 Partially updated | In case of partial success the representation of the updated streamInfoList is returned. | |
| error-ResponseType | 4xx/5xx | Returned in case of an error | M |

### 9.3.2.1aResource "/streamInfoList/{streamId}"

### 9.3.2.1a.1 Description

This resource represents the information for a stream.

### 9.3.2.1a.2 URI

Resource URI = http://{streamTarget}/PerfDataStreamingMnS/v1530/streamInfoList/{streamId}

The resource URI variables a defined in the following table.

**Table 9.3.2.1a.2-1: URI variables**

| **Name** | **Definition** |
|---|---|
| streamTarget | See table 9.3.2.1.2-1. |

| | |
|---|---|
| ***9.3.2.1a.3 HTTP methods*** *9.3.2.1a.3.1 HTTP GET* | |

This method shall support the URI query parameters specified in the following table.

**Table 9.3.2.1a.3.1-1: URI query parameters supported by the GET method on this resource**

| **Name** | **Data type** | **Description** | **SQ** |
|---|---|---|---|
| | | | |

This method shall support the request data structures, the response data structures and response codes specified in the following table.

**Table 9.3.2.1a.3.1-2: Data structures supported by the GET request body on this resource**

| **Data type** | **Description** | **SQ** |
|---|---|---|
| n/a | n/a | n/a |

**Table 9.3.2.1a.3.1-3: Data structures supported by the GET Response Body on this resource**

| **Data type** | **Response codes** | **Description** | **SQ** |
|---|---|---|---|
| streamInfoRetrieval-ResponseType | 200 OK | In case of success the representation of the retrieved stream information is returned. | M |
| error-ResponseType | 4xx/5xx | Returned in case of an error | M |

### 9.3.2.1a.3.2 HTTP PATCH

This method shall support the URI query parameters specified in the following table.

**Table 9.3.2.1a.3.2-1: URI query parameters supported by the PATCH method on this resource**

| **Name** | **Data type** | **Description** | **SQ** |
|---|---|---|---|
| | | | |

This method shall support the request data structures, the response data structures and response codes specified in the following table.

**Table 9.3.2.1a.3.2-2: Data structures supported by the PATCH request body on this resource**

| **Data type** | **Description** | **SQ** |
|---|---|---|
| streamInfoToUpdate-RequestType | Represention of the stream information to be updated. | M |

**Table 9.3.2.1a.3.2-3: Data structures supported by the PATCH Response Body on this resource**

| **Data type** | **Response codes** | **Description** | **SQ** |
|---|---|---|---|
| streamInfoUpdate-ResponseType | 200 OK | In case of success the representation of the updated stream information is returned. | M |
| error-ResponseType | 4xx/5xx | Returned in case of an error | M |

### 9.3.2.1a.3.3 HTTP DELETE

This method shall support the URI query parameters specified in the following table.

**Table 9.3.2.1a.3.3-1: URI query parameters supported by the DELETE method on this resource**

| **Name** | **Data type** | **Description** | **SQ** |
|---|---|---|---|
| | | | |

This method shall support the request data structures, the response data structures and response codes specified in the following table.

**Table 9.3.2.1a.3.3-2: Data structures supported by the DELETE request body on this resource**

| **Data type** | **Description** | **SQ** |
|---|---|---|
| n/a | n/a | n/a |

**Table 9.3.2.1a.3.3-3: Data structures supported by the DELETE Response Body on this resource**

| **Data type** | **Response codes** | **Description** | **SQ** |
|---|---|---|---|
| n/a | 204 No Content | In case of success no message body is returned | M |
| error-ResponseType | 4xx/5xx | Returned in case of an error | M |

### 9.3.2.2 Resource "/streamingConnection"

### 9.3.2.2.1 Description

This resource represents a streaming Connection (to be) upgraded to WebSocket protocol.

### 9.3.2.2.2 URI

Resource URI = wss://{streamTarget}/PerfDataStreamingMnS/v1520/streamingConnection

The resource URI variables a defined in the following table.

**Table 9.3.2.2.2-1: URI variables**

| **Name** | **Definition** |
|---|---|
| stream Target | The "streamTarget" part corresponds to the streamTarget parameter provided in the createMeasurementJob operation (see clause 6.1.1.2) or the streamTarget |
| | attribute of the MOI of MeasurementControlor MeasurementReader, see 3GPP TS 28.622). |

### 9.3.2.2.3 HTTP methods

### 9.3.2.2.3.1 HTTP GET

This method shall support the URI query parameters specified in the following table.

**Table 9.3.2.2.3.1-1: Header parameters supported by the GET request on this resource**

| **Name** | **Data type** | **Description** | **SQ** |
|---|---|---|---|
| Upgrade | Upgrade-HeaderType | To indicate the HTTP GET operation is to upgrade the connection to WebSocket protocol | |
| Connection | Connection-HeaderType | To indicate the HTTP GET operation is to upgrade the connection to another protocol | |
| See-WebSocket-Key | Sec-WebSocket-Key-HeaderType | The See-WebSocket-Key needed for establishing the WebSocket connection. | |
| See-WebSocket-Version | Sec-WebSocket-Version-HeaderType | The See-WebSocket-Version needed for establishing the WebSocket connection. | |

This method shall support the URI query parameters specified in the following table.

**Table 9.3.2.2.3.1-2: URI query parameters supported by the GET method on this resource**

| **Name** | **Data type** | **Description** | **SQ** |
|---|---|---|---|
| | | | |

This method shall support the request data structures, the response data structures and response codes specified in the following tables.

**Table 9.3.2.2.3.1-3: Data structures supported by the GET request body on this resource**

| **Data type** | **Description** | **SQ** |
|---|---|---|
| n/a | n/a | n/a |

**Table 9.3.2.2.3.1-4: Header parameters supported by the GET response on this resource**

| **Name** | **Data type** | **Description** | **SQ** |
|---|---|---|---|
| Upgrade | Upgrade-HeaderType | To indicate the HTTP GET operation is to upgrade the connection to WebSocket protocol | |
| Connection | Connection-HeaderType | To indicate the HTTP GET operation is to upgrade the connection to another protocol | |
| See-WebSocket-Accept | Sec-WebSocket-Accept-HeaderType | The Sec-WebSocket-Accept responded when establishing the WebSocket connection. | |

**Table 9.3.2.2.3.1-5: Data structures supported by the GET response body on this resource**

| **Data type** | **Response codes** | **Description** | **SQ** |
|---|---|---|---|
| n/a | 101 Switching Protocols | The status code indicating the connection has been successfully upgraded to WebSocket. | M |
| error-ResponseType | 4xx/5xx | Returned in case of an error | M |

### 9.4.1 General

**Table 9.4.1-1: Data types defined in this specification**

| **Data type** | **Reference** | **Description** |
|---|---|---|
| **General types** | | |
| uri-Type | 9.4.6.2 | The data type of a URI |

| **Types used in paths** | | |
|---|---|---|
| | | |

| **Types used in headers** | | |
|---|---|---|
| Upgrade-HeaderType | 9.4.6.2 | Used in the headers of HTTP GET request to upgrade the connection to WebSocket. |
| Connection-HeaderType | 9.4.6.2 | Used in the headers of HTTP GET request to upgrade the connection to WebSocket. |
| See-WebSocket-Key-HeaderType | 9.4.6.2 | Used in the headers of HTTP GET request to upgrade the connection to WebSocket. |
| Sec-WebSocket-Version-HeaderType | 9.4.6.2 | Used in the headers of HTTP GET request to upgrade the connection to WebSocket. |
| Sec-WebSocket-Accept | 9.4.6.2 | Used in the headers of HTTP GET response for upgrading the connection to WebSocket. |

| **Types used in query parts** | | |
|---|---|---|
| | | |

| **Types used in request bodies** | | |
|---|---|---|
| streamInfoListPost-RequestType | 9.4.4.1 | Used in the request body of HTTP POST to post the set of information about the streams. |
| streamInfoToUpdate-RequestType | 9.4.4.x | Used in the request body of HTTP PATCH to update the information for one or more streams. |
| | | |

| **Types used in response bodies** | | |
|---|---|---|
| error-ResponseType | 9.4.4.2 | Used in the response body describing the error. |
| streamInfoListPost-ResponseType | 9.4.4.p | Used in the response body of HTTP POST to return the set of stream information posted. |
| streamInfoRetrieval-ResponseType | 9.4.4.u | Used in the response body of HTTP GET to return the information about one stream. |
| streamInfoListRetrieval-ResponseType | 9.4.4.w | Used in the response body of HTTP GET to return the set of information about the streams. |
| streamInfoUpdate-ResponseType | 9.4.4.y | Used in the response body of HTTP PATCH to return the updated information about one stream. |
| streamInfoListUpdate-ResponseType | 9.4.4.z | Used in the response body of HTTP PATCH to return the set of updated information about the streams. |

| **Types used for resources** | | |
|---|---|---|
| | | |

| **Types referenced by the definitions above** | | |
|---|---|---|
| streamInfo-Type | 9.4.5.1 | |

### • 9.4.4.1 Type streamInfoListPost-RequestType

**Table 9.4.4.1-1: Definition of type streamInfoListPost-RequestType**

| **Attribute name** | **Data type** | **Description** | **SQ** |
|---|---|---|---|
| streamInfoList | Array (streamInfo-Type) | The list of information about the streams. | M |

### • 9.4.4.x Type streamInfoToUpdate-RequestType

**Table 9.4.4.x-1: Definition of type streamInfoToUpdateRequestType**

| **Attribute name** | **Data type** | **Description** | **SQ** |
|---|---|---|---|
| iOCInstance | uri-Type | The updated URI of the measured object instance | M |
| measTypes | array(string) | The updated list of measurement type. | M |

### • 9.4.4.p Type streamInfoListPost-ResponseType

**Table 9.4.4.p-1: Definition of type streamInfoListPost-ResponseType**

| **Attribute name** | **Data type** | **Description** | **SQ** |
|---|---|---|---|
| ListOfStreamInfoPosted | array(streamInfo-Type) | The set of stream information posted | M |

### • 9.4.4.u Type streamInfoRetrieval-ResponseType

**Table 9.4.4.u-1: Definition of type streamInfoRetrieval-ResponseType**

| **Attribute name** | **Data type** | **Description** | **SQ** |
|---|---|---|---|
| streamInfoOut | streamInfo-Type | The returned stream information | M |

### • 9.4.4.w Type streamInfoListRetrieval-ResponseType

**Table 9.4.4.w-1: Definition of type streamInfoRetrieval-ResponseType**

| **Attribute name** | **Data type** | **Description** | **SQ** |
|---|---|---|---|
| listOfStreamInfoOut | array(streamInfo-Type) | The returned information for the list of streams | M |

### • 9.4.4.y Type streamInfoUpdate-ResponseType

**Table 9.4.4.u-1: Definition of type streamInfoUpdate-ResponseType**

| **Attribute name** | **Data type** | **Description** | **SQ** |
|---|---|---|---|
| streamInfoUpdated | streamInfo-Type | The updated stream information | M |

### • 9.4.4.z Type streamInfoListUpdate-ResponseType

**Table 9.4.4.w-1: Definition of type streamInfoUpdate-ResponseType**

| **Attribute name** | **Data type** | **Description** | **SQ** |
|---|---|---|---|
| listOfStreamUpdated | array(streamInfo-Type) | The updated information for the list of streams | M |

### E.3 Performance data streaming service

```
 {
 "openapi": "3.0.1",
 "info": {
   "title": "TS 28.550 Performance Data Streaming Service",
   "version": "15.3.0",
   "description": "OAS 3.0.1 specification of the Performance Data Streaming
   Service"
  },
 "servers": [
   {"url": "http://{streamTarget}/PerfDataStreamMnS/v1530",
     "description": "This URL is used for posting the set of information about
     streams supported on the connection between the producer and the consumer.",
     "variables": {
       "streamTarget": {
        "description": "The open API server of the performance data streaming
        service is located in the consumer side,and the "streamTarget" part corresponds
        to the streamTarget parameter provided in the createMeasurementJob operation (see
        clause 6.1.1.2) or the streamTarget attribute of the MOI of MeasurementControlor
        MeasurementReader, see 3GPP TS 28.622 3GPP TS 28.622) .",
        "default": "example.com"
       }
     }
   },
   {
     "url": "wss://{streamTarget}/PerfDataStreamMnS/v1530",
     "description": "This URL is used for establishing the WebSocket connection
     for the performance data streaming service.",
     "variables": {
       "streamTarget": {
        "description": "The open API server of the performance data streaming
        service is located in the consumer side,and the "streamTarget" part corresponds
        to the streamTarget parameter provided in the createMeasurementJob operation (see
        clause 6.1.1.2) or the streamTarget attribute of the MOI of MeasurementControlor
        MeasurementReader, see 3GPP TS 28.622 3GPP TS 28.622).",
        "default": "example.com"
       }
     }
   }
  ],
 "paths": {
   "/streamInfoList": {
     "post": {
       "summary": "The set of information about the streams sent from the
       producer to the consumer",
       "description": "To send the streamInfoList from the producer to the
       consumer",
       "requestBody": {
        "required": true,
        "content": {
          "application/json": {
            "schema": {
             "$ref": "#/components/schemas/streamInfoListPost-RequestType"
            }
          }
        }
       },
       "responses": {
        "201": {
          "description": "Success case (\"201 Posted\"). The streamInfoList is
          successfully posted.",
          "content": {
            "application/json": {
             "schema": {
               "$ref": "#/components/schemas/streamInfoListPost-ResponseType"
             }
            }
          }
        },
        "202": {
          "description": "Partial success case (\"202 Partially posted\"). The
          representation of the posted resource on stream information.",
          "content": {
            "application/json": {
             "schema": {
               "$ref": "#/components/schemas/streamInfoListPost-ResponseType"
             }
            }
          }
        },
        "default": {
          "description": "Error case.",
          "content": {
            "application/json": {
             "schema": {
               "$ref": "#/components/schemas/error-ResponseType"
             }
            }
          }
        }
       }
     },
     "get": {
       "summary": "Read resources of stream information from the streaming
       consumer",
       "description": "With HTTP GET, resources of stream information are read.
       The resources to be read are identified with the path component (base resource)
       and the query component (streamldList) of the URI. The fields query component
       allows to select the resource properties to be returned.",
       "parameters": [
        {
          "name": "streamldList",
          "in": "query",
          "description": "This parameter identifies the list of streamid to
          select from the collection resources identified with the path component of the
          URI.",
          "required": true,
          "schema": {
            "type": "array",
            "items": {
             "type": "string"
            }
          }
        },
       ],
       "responses": {
        "200": {
          "description": "Success case (\"200 OK\"). The resources identified
          in the request for retrieval are returned in the response message body. In case
          the fields query parameter is used, the selected resources are returned.",
          "content": {
            "application/json": {
             "schema": {
               "$ref": "#/components/schemas/listOfStreamInfoRetrieval-
               ResponseType"
             }
            }
          }
        },
        "202": {
          "description": "Partial success case (\"202 Partially retrieved\").
          The representation of the retrieved resources on stream information.",
          "content": {
            "application/json": {
             "schema": {
               "$ref": "#/components/schemas/listOfStreamInfoRetrieval-
               ResponseType"
             }
            }
          }
        },
        "default": {
          "description": "Error case.",
          "content": {
            "application/json": {
             "schema": {
               "$ref": "#/components/schemas/error-ResponseType"
             }
            }
          }
        }
       }
     },
     "patch": {
       "summary": "Update resources of stream information to the streaming
       consumer",
       "description": "With HTTP PATCH, resources of stream information are to
       be updated. The resources to be updated are identified with the path component
 (base resource) and the query component (streamIdList) of the URI. The fields
 query component allows to select the resource properties to be updated.",
       "parameters": [
        {
          "name": "streamldList",
          "in": "query",
          "description": "This parameter identifies the list of streamId to
          select from the collection resources identified with the path component of the
          URI.",
          "required": true,
          "schema": {
            "type": "array",
            "items": {
             "type": "string"
            }
          }
        },
       ],
       "requestBody": {
        "required": true,
        "content": {
          "application/json": {
            "schema": {
             "$ref": "#/components/schemas/listOfStreamInfoToUpdate-
             RequestType"
            }
          }
        }
       },
       "responses": {
        "200": {
          "description": "Success case (\"200 OK\"). The resources selected by
          the query parameter are updated and returned in the response message body.",
          "content": {
            "application/json": {
             "schema": {
               "$ref": "#/components/schemas/listOfStreamInfoUpdate-
               ResponseType"
             }
            }
          }
        },
        "202": {
          "description": "Partial success case (\"202 Partially updated\"). The
          representation of the updated resources on stream information",
          "content": {
            "application/json": {
             "schema": {
               "$ref": "#/components/schemas/listOfStreamInfoUpdate-
               ResponseType"
             }
            }
          }
        },
        "default": {
          "description": "Error case.",
          "content": {
            "application/json": {
             "schema": {
               "$ref": "#/components/schemas/error-ResponseType"
             }
            }
          }
        }
       }
     }
   },
   "/streamInfoList/{streamId}": {
     "get": {
       "summary": "Read resource of the stream information from the streaming
       consumer",
       "description": "With HTTP GET, resource of stream information is read.
       The resource to be read is identified with the path component the URI.",
       "parameters": [
        {
          "name": "streamId",
          "in": "path",
          "description": "Identifies the stream for which the information is to
          be retrieved.",
          "required": true,
          "schema": {
            "$ref": "#/components/schemas/uri-Type"
          }
        }
       ],
       "responses": {
        "200": {
          "description": "Success case (\"200 OK\"). The resource identified in
          the request for retrieval is returned in the response message body.",
          "content": {
            "application/json": {
             "schema": {
               "$ref": "#/components/schemas/listOfStreamInfoRetrieval-
               ResponseType"
             }
            }
          }
        },
        "default": {
          "description": "Error case.",
          "content": {
            "application/json": {
             "schema": {
               "$ref": "#/components/schemas/error-ResponseType"
             }
            }
          }
        }
       }
     },
     "patch": {
       "summary": "Update the resource of stream information to the streaming
       consumer",
       "description": "With HTTP PATCH, resource of stream information is to be
       updated. The resource to be updated is identified by the path component of the
       URI. ",
       "parameters": [
        {
          "name": "streamId",
          "in": "path",
          "description": "Identifies the stream for which the information is to
          be updated.",
          "required": true,
          "schema": {
            "$ref": "#/components/schemas/uri-Type"
          }
        }
       ],
       "requestBody": {
        "required": true,
        "content": {
          "application/json": {
            "schema": {
             "$ref": "#/components/schemas/streamInfoToUpdate-RequestType"
            }
          }
        }
       },
       "responses": {
        "200": {
          "description": "Success case (\"200 OK\"). The resources identified
          by the path of the URI is updated and returned in the response message body.",
          "content": {
            "application/json": {
             "schema": {
               "$ref": "#/components/schemas/streamInfoUpdate-ResponseType"
             }
            }
          }
        },
        "default": {
          "description": "Error case.",
          "content": {
            "application/json": {
             "schema": {
               "$ref": "#/components/schemas/error-ResponseType"
             }
            }
          }
        }
       ) },
     "delete": {
       "summary": "The stream information to be deleted by the producer to the
       consumer",
       "description": "With HTTP DELETE, resource of stream information
       identified by the path component of the URI is to be deleted.",
       "parameters": [
        {
          "name": "streamId",
          "in": "path",
          "description": "Identifies the stream for which the information is to
          be deleted",
          "required": true,
          "schema": {
            "$ref": "#/components/schemas/uri-Type"
          }
        }
       ],
       "responses": {
        "204": {
          "description": "Success case (\"204 No Content\"). The stream
          information resource has been deleted. The response message body is absent."
        },
        "default": {
          "description": "Error case.",
          "content": {
            "application/json": {
             "schema": {
               "$ref": "#/components/schemas/error-ResponseType"
             }
            }
          }
        }
       }
     }
   },
   "/streamConnection": {
     "get": {
       "summary": "The connection for streaming from the producer to the
       consumer",
       "description": "To establish the WebSocket connection between the
       producer and the consumer. The HTTP version of this operation shall not be
       earlier than HTTP/1.1",
       "parameters": [
         {
         "in": "header",
         "name": "Upgrade",
         "required": true,
         "schema": {
             "$ref": "#/components/schemas/Upgrade-HeaderType"
            }
         },
         {
         "in": "header",
         "name": "Connection",
         "required": true,
         "schema": {
             "$ref": "#/components/schemas/Connection-HeaderType"
            }
         },
         {
         "in": "header",
         "name": "Sec-WebSocket-Key",
         "required": true,
         "schema": {
             "$ref": "#/components/schemas/Sec-WebSocket-Key-HeaderType"
            }
         },
         {
         "in": "header",
         "name": "Sec-WebSocket-Version",
         "required": true,
         "schema": {
             "$ref": "#/components/schemas/Sec-WebSocket-Version-HeaderType"
            }
         }
       ],
       "responses": {
        "101": {
          "description": "Success case (\"101 Switching Protocols \"). The
          connection has been successfully switched to WebSocket. The response message body
          is absent.",
          "headers": {
           "Upgrade": {
              "schema": {
                "$ref": "#/components/schemas/Upgrade-HeaderType"
              }
           },
           "Connection": {
              "schema": {
                "$ref": "#/components/schemas/Connection-HeaderType"
               }
           },
           "Sec-WebSocket-Accept-HeaderType": {
             "schema": {
                "$ref": "#/components/schemas/Sec-WebSocket-Accept-HeaderType"
             }
           }
          }
        },
        "default": {
          "description": "Error case.",
          "content": {
            "application/json": {
             "schema": {
               "$ref": "#/components/schemas/error-ResponseType"
             }
            }
          }
        }
       }
     }
   }
  },
 "components": {
   "schemas": {
     "uri-Type": {
       "type": "string"
     },
     "streamInfo-Type": {
       "type": "object",
       "properties": {
        "streamId": {
          "type": "string"
        },
        "iOCInstance": {
            "$ref": "#/components/schemas/uri-Type"
        },
        "measTypes": {
          "type": "array",
          "items": {
            "type": "string"
          }
        }
       }
     },
     "error-ResponseType": {
       "type": "object",
       "properties": {
        "error": {
          "type": "object",
          "properties": {
            "errorInfo": {
             "type": "string"
            }
          }
        }
       }
     },
     "streamInfoListPost-RequestType": {
       "type": "object",
       "properties": {
        "streamInfoList": {
          "type": "array",
          "items": {
            "$ref": "#/components/schemas/streamInfo-Type"
          }
        }
       }
     },
     "streamInfoListPost-ResponseType": {
       "type": "object",
       "properties": {
        "streamInfoListPosted": {
          "type": "array",
          "items": {
            "$ref": "#/components/schemas/streamInfo-Type"
          }
        }
      }
     },
     "streamInfoRetrieval-ResponseType": {
      "type": "object",
      "properties": {
        "streamInfoOut": {
           "$ref": "#/components/schemas/streamInfo-Type"
        }
      }
     },
     "listOfStreamInfoRetrieval-ResponseType": {
      "type": "object",
      "properties": {
        "listOfStreamInfoOut": {
          "type": "array",
          "items": {
           "$ref": "#/components/schemas/streamInfo-Type"
          }
        }
      }
     },
     "streamInfoToUpdatePropertyType": {
      "type": "object",
      "properties": {
        "iOCInstance": {
          "description": "The updated measured object instance, empty value
          means no update.",
          "allOf": [
           "$ref": "#/components/schemas/uri-Type"
          ]
        },
        "measTypes": {
          "description": "The updated list of measurement type, empty value
          means no update.",
          "type": "array",
          "items": {
            "type": "string"
          }
        }
       }
     },
     "streamInfoToUpdate-RequestType": {
       "type": "object",
       "properties": {
        "streamInfoToUpdate": {
           "$ref": "#/components/schemas/streamInfoToUpdatePropertyType"
        }
       }
     },
     "listOfStreamInfoToUpdate-RequestType": {
       "type": "object",
       "properties": {
        "listOfStreamInfoToUpdate": {
          "type": "array",
          "items": {
            "$ref": "#/components/schemas/streamInfoToUpdatePropertyType"
          }
        }
       }
     },
     "streamInfoUpdate-ResponseType": {
       "type": "object",
       "properties": {
        "streamInfoUpdated": {
            "$ref": "#/components/schemas/streamInfo-Type"
        }
       }
     },
     "listOfStreamInfoUpdate-ResponseType": {
       "type": "object",
       "properties": {
        "listOfStreamInfoUpdated": {
          "type": "array",
          "items": {
            "$ref": "#/components/schemas/streamInfo-Type"
          )
        }
       }
     },
     "Upgrade-HeaderType": {
       "type": "string",
       "enum": [
        "websocket",
       ]
     },
     "Connection-HeaderType": {
       "type": "string",
       "enum": [
        "Upgrade",
       ]
     },
     "Sec-WebSocket-Key-HeaderType": {
       "type": "string"
     },
     "Sec-WebSocket-Version-HeaderType": {
       "type": "string"
     },
     "Sec-WebSocket-Accept-HeaderType": {
       "type": "string"
     }
   }
  }
  }
```

In other embodiments, data other than performance data can be streamed. Such data may include trace data.

In an example of a management services architecture, a NF instantiation service producer may provide a management service to a consumer, by receiving a request from a consumer to instantiate a 3GPP NF; checking whether the VNF package(s) of the VNF(s) realizing the virtualized part of the 3GPP NF have been on-boarded to the NFV MANO system, and on-boarding the VNF package(s) that have not been on-boarded yet; interacting with the NFV MANO system to instantiate the VNF(s) that are realizing the virtualized part of subject 3GPP NF; informing the consumer that the 3GPP NF has been instantiated; and creating the Managed Object Instances (MOIs) for the subject 3GPP NF.

An NF configuration service producer may provide management services to a consumer by receiving a request from a consumer to configure a 3GPP NF instance; configuring the 3GPP NF instance; and informing the consumer that the 3GPP NF instance has been configured. The request from the consumer to configure a 3GPP NF instance may include a request to create the MOI(s) for the 3GPP NF. The request from the consumer to configure the 3GPP NF instance may be a MOI attribute modification request. Configuring the 3GPP NF instance may include interaction with the ETSI NFV MANO system to update the corresponding VNF instance(s) realizing the virtualized part of the 3GPPNF.

A network creation service producer may provide management services to a consumer by receiving a request from a consumer to create a 3GPP network; preparing the NSD(s) for the NS(s) that are to realize the requested 3GPP network, and on-boarding the NSD(s) to ETSI NFV MANO system; on-boarding the VNF package(s) of the constituent VNFs to ETSI NFV MANO system, if the VNF package has not yet been on-boarded; interacting with ETSI NFV MANO system to instantiate the NS(s); consuming a management service to configure the 3GPP NF instance(s) that are constituting the subject 3GPP network; and creating the MOI(s) for the created network. The interaction with the ETSI NFV MANO system to instantiate the NS(s) may include the instantiation of constitute (constituent VNFs). The ETSI NFV MANO system may inform the management service producer about the instantiation of VNFs. The management service producer may create the MOI(s) for the newly instantiated VNFs, and may provide the NF configuration service. Additionally, the management service being consumed to configure the 3GPP NF instance(s) may be the NF configuration service.

The network configuration service producer may provide management services to a consumer, by receiving a request from a consumer to configure a 3GPP network; configuring the 3GPP network; and informing the consumer that the 3GPP network has been configured. The request from the consumer to configure a 3GPP network includes a request to create the MOI(s) for the 3GPP network, and the request from the consumer to configure a 3GPP network is a MOI attribute modification request. Configuring the 3GPP network further may include interaction with the ETSI NFV MANO system to update the corresponding NS instance(s) realizing (fully or partially) the 3GPP network. The interaction with the ETSI NFV MANO system to update the NS(s) may include the instantiation of new VNFs. The ETSI NFV MANO system may inform a management service producer about the instantiation of VNFs. The management service producer may create the MOI(s) for the newly instantiated VNFs, and the management service producer may provide the NF configuration service. In addition, configuring the 3GPP network further includes configuring the 3GPP NFs, and configuring the 3GPP NFs may be via consuming the management service for NF configuration.

A NSSI creation service producer (NSSMF) may create a NSSI for a consumer, by consuming a management service to configure the 3GPP network; and/or consuming a management service to configure the 3GPP NF(s). The management service consumed to configure the 3GPP network may be a network configuration service, and the management service consumed to configure the 3GPP NF(s) may be an NF configuration service.

5G management is based on Service Based Architecture (SBA) where each management function is a producer that produces management services to be consumed by other management functions. A management service offers management capabilities. These management capabilities are accessed by management service consumers via standardized service interface composed of individually specified management service components.

The Network Function Management Function (NFMF) provides NF management services to Network Slice Subnet Management Function (NSSMF); the NSSMF consumes NF management services to provide NSS management services to Network Slice Management Function (NSMF); and the NSMF consumes NSSMF management services to provide NS management services to other management entity.

A management service offers management capabilities. These management capabilities are accessed by management service consumers via standardized service interface composed of individually specified management service components.

A management service may include a management service component type A and management service component type B; a management service component type A, management service component type B, and management service component type C; or any combination of management component types A, B, and/or C. A management service combines elements of management service component type A, B and C. The management service components are combined to allow a management service consumer to interact with a management service producer via a specified service interface.

Management service component type A is a group of management operations and/or notifications agnostic of managed entities. Management service component type B is the management information represented by information model of managed entities. Management service component type B includes the following models: 1) Network resource model for NG-RAN and NR as defined in TS 28.541. 2) Network resource model for 5GC as defined in TS 28.541. 3) Network slice information model as defined in TS 28.541. 4) Network slice subnet information model as defined in TS 28.541. In embodiments, additional other models belong to type B is to be added later. Management service component type C is performance information of the managed entity and fault information of the managed entity. Management service component type C includes the following information: 1. Alarm information as defined in TS 28.546. 2. Performance data as defined in TS 28.552, 28.553, 28.554, and 32.425. In embodiments, management service component type C could be merged with Management service component type B. Mechanisms for collecting Minimization Drive Test (MDT) data may also be included. Additionally, more management information belonging to type C is to be added later.

Management capability exposure governance provides exposure governance on basic elements of management function service-based interface: 1) Management service component type A; 2) Management service component type B; 3) Management service component type C. When there is a Management Service A exposure without exposure governance, Management Service A' Consumer can access all management capability offered by Management Service A' Producer. When Management Service A is exposed with applied exposure governance it becomes Management Service A'. Management Service A' Consumer can access Management Service A' after following steps: Management Service A, exposed by Management Service A' Producer, is consumed by Management Service A' Consumer; Management Service B, exposed by Management Service B Producer, is consumed by Operator who applies exposure governance on exposed Management Service A; Management Service A' Producer produces Management Service A. The Management Service A' Consumer, that consumes Management Service A, the Management Service B and Management Service A' Producer, that produces Management Service B (with management capability exposure governance) and Management Service A, can be represented as one management function entity (e.g., EGMF).

The Management Function (MF) is a management entity whose externally-observable behaviour and interfaces are specified by 3GPP. In the service-based management architecture, MF plays the role of either Management Service producer or Management Service consumer. A Management Service produced by MF may have multiple consumers. The MF may consume multiple Management Services from one or multiple Management Service producers.

Management Functions may interact by consuming Management Services produced by other Management Functions. Figure MS-6 illustrates multiple scenarios, including: MF1 produces Management Service MnS-a; MF2 consumes Management Service MnS-a produced by MF 1 and produces Management Services MnS-b and MnS-c; MF3 produces Management Service MnS-c; MF4 consumes Management Service MnS-b produced by the MF2; and MF5 consumes Management Services MnS-c produced by the MF2 and MF3, and in turn produces the same Management Service MnS-c. The behaviour of MF5 may be seen as aggregation of Management Services MnS-c.

Different scenarios include: MF1 produces Management Service MnS-a; MF2 consumes Management Service MnS-a produced by MF1 and produces Management Services MnS-b and MnS-c; MF3 produces Management Service MnS-c; MF4 consumes Management Service MnS-b produced by the MF2; MF5 consumes Management Services MnS-c produced by the MF2 and MF3, and in turn produces the same Management Service MnS-c. The behaviour of MF5 may be seen as aggregation of Management Services MnS-c.

Mobile networks have the capability to support a variety of services, increasing flexibility of the network may cause management challenges. The management system can benefit from management data analytics services to make the mobile network more efficient in responding to various requests. The management data analytics utilize the network management data collected from the network and make the corresponding analytics based on the collected information. For example, the information provided by PM data analytics services can be used to optimize network performance, and the information provided by FM data analytics services can be used to predict and prevent failures of the network. For mobile networks with slicing, a network slice data analytics service can consume performance measurements and fault measurements data for its constituent network slice subnets.

The Management Data Analytics Service (MDAS) can be used for NF(s), NSSI(s), NSI(s) and Subnetwork(s)/network(s). The MDAS comprises an MDAS producer that analyzes management data (e.g., performance measurements, alarm information, and configuration information, etc.) of the NF(s), NSSI(s), NSI(s) and Subnetwork(s)/network(s) and provides management data analytical KPIs. The management services for a mobile network including network slicing may be produced by a set of functional blocks. This annex shows an example of such deployment scenario where functional blocks (such as NSMF, NSSMF, NFMF and CSMF) are producing and consuming various management services.

In this deployment example the NFMF (Network Function Management Function) provides the management services for one or more NF and may consume some management services produced by other functional blocks. The NF provides some management services, for example the NF performance management services, NF configuration management services and NF fault supervision services. NSSMF provides the management services for one or more NSSI and may consume some management services produced by other functional blocks. NSMF provides the management services for one or more NSI and may consume some management services produced by other functional blocks. The MDAF provides the Management Data Analytics Service for one or more NF, NSSI and/or NSI, and may consume some management services produced by other functional blocks, and the CSMF consumes the management service(s) provided by the other functional blocks. This deployment example does not illustrate what management services the CSMF consumes. In this example, one functional block may consume the management service(s) provided by another functional block, depending on the management scope of the functional block(s). The scope may be expressed in the terms of Management Service Components (see e.g., section 2 supra).

MDAS can be deployed at different levels, for example, at domain level (e.g., RAN, CN, NSSI) or in a centralized manner (e.g., in a PLMN level). A domain-level MDAS provides domain specific analytics, e.g., resource usage prediction in a CN or failure prediction in a NSSI, etc. A centralized MDAS can provide end-to-end or cross-domain analytics service, e.g., resource usage or failure prediction in an NSI, optimal CN node placement for ensuring lowest latency in the connected RAN, etc. In one example, the Domain MDAF produces domain MDAS. The domain MDAS is consumed by the Centralized MDAF and other authorized MDAS Consumers (for example, infrastructure manager, network manager, slice manager, slice subnet manger, other 3rd party OSS, etc.). The Centralized MDAF produces centralized MDAS, which is consumed by different authorized MDAS Consumers.

Note that the PDSS producers and consumers may communicate with RNIs over an RNI API to obtain contextual information from a corresponding RAN. RNI may be provided to the service consumers via an access node. The RNI API may support both query and subscription (e.g., a pub/sub) based mechanisms that are used over a Representational State Transfer (RESTful) API or over a message broker of a MEC. A MEC App may query information on a message broker via a transport information query procedure, wherein the transport information may be pre-provisioned to the MEC App via a suitable configuration mechanism. The various messages communicated via the RNI API may be in XML, JSON, Protobuf, or some other suitable format.

The RNI may be used by MEC Apps and MEC platform to optimize the existing services and to provide new types of services that are based on up to date information on radio conditions. As an example, a MEC App XP136 may use RNI to optimize current services such as video throughput guidance. In throughput guidance, a radio analytics MEC App XP136 may use MEC services to provide a backend video server with a near real-time indication on the throughput estimated to be available at the radio downlink interface in a next time instant. The throughput guidance radio analytics application computes throughput guidance based on the required radio network information it obtains from a multi-access edge service running on the MEC server. RNI may be also used by the MEC platform to optimize the mobility procedures required to support service continuity, such as when a certain MEC App requests a single piece of information using a simple request-response model (e.g., using RESTful mechanisms) while other MEC Apps subscribe to multiple different notifications regarding information changes (e.g., using a pub/sub mechanism and/or message broker mechanisms).

The location services (LS), when available, may provide authorized MEC Apps with location-related information, and expose such information to the MEC Apps. With location related information, the MEC platform or one or more MEC Apps perform active device location tracking, location-based service recommendations, and/or other like services. The LS supports the location retrieval mechanism, e.g., the location is reported only once for each location information request. The LS supports a location subscribe mechanism, for example, the location is able to be reported multiple times for each location request, periodically or based on specific events, such as location change. The location information may include, inter alia, the location of specific UEs currently served by the radio node(s) associated with the MEC server, information about the location of all UEs currently served by the radio node(s) associated with the MEC server, information about the location of a certain category of UEs currently served by the radio node(s) associated with the MEC server, a list of UEs in a particular location, information about the location of all radio nodes currently associated with the MEC server, and/or the like. The location information may be in the form of a geolocation, a Global Navigation Satellite Service (GNSS) coordinate, a Cell identity (ID), and/or the like. The LS is accessible through the API defined in the Open Mobile Alliance (OMA) specification "RESTful Network API for Zonal Presence" OMA-TS-REST-NetAPI-ZonalPresence-V1-0-20160308-C. The Zonal Presence service utilizes the concept of "zone", where a zone lends itself to be used to group all radio nodes that are associated to a MEC host or MEC server, or a subset thereof, according to a desired deployment. In this regard, the OMA Zonal Presence API provides means for MEC Apps to retrieve information about a zone, the access points associated to the zones and the users that are connected to the access points. In addition, the OMA Zonal Presence API, allows authorized application to subscribe to a notification mechanism, reporting about user activities within a zone. In various embodiments, a MEC server may access location information or zonal presence information of individual UEs using the OMA Zonal Presence API to identify the relative location or positions of the UEs.

The bandwidth management services (BWMS) provides for the allocation of bandwidth to certain traffic routed to and from MEC Apps, and specify static/dynamic up/down bandwidth resources, including bandwidth size and bandwidth priority. MEC Apps may use the BWMS to update/receive bandwidth information to/from the MEC platform. In some embodiments, different MEC Apps running in parallel on the same MEC server may be allocated specific static, dynamic up/down bandwidth resources, including bandwidth size and bandwidth priority. The BWMS includes a bandwidth management (BWM) API to allowed registered applications to statically and/or dynamically register for specific bandwidth allocations per session/application. The BWM API includes HTTP protocol bindings for BWM functionality using RESTful services or some other suitable API mechanism.

In some embodiments, an apparatus comprises processing circuitry and memory configured to operate as a performance data streaming service (PDSS) producer for a new radio (NR) network, wherein the processing circuitry is configured to: generate, for transmission to a PDSS consumer, an establish streaming connection request to establish a streaming connection between the PDSS producer and the PDSS consumer, the streaming connection containing one or more streams; after the streaming connection is established, generate, for transmission to the PDSS consumer, a PDSS request to one of: obtain stream information about at least one stream of the streaming connection, add at least one stream to the streaming connection, or delete at least one stream from the streaming connection; and obtain, from the PDSS consumer, a PDSS response in response to the PDSS request.

Although they have been described specific example embodiments, it will be evident that various modifications and changes may be made to these embodiments without departing from the scope of the appended claims. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure.

The subject matter may be referred to herein, individually and/or collectively, by the term "embodiment" merely for convenience and without intending to voluntarily limit the scope of this invention as defined by the appended claims.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. An apparatus for a new radio, NR, network, the apparatus comprising:
processing circuitry; and memory, the processing circuitry to configure the apparatus to operate as a performance data streaming service, PDSS, producer (502, 606, 702, 802, 902,1002), the processing circuitry configured to:
establish a streaming connection between the PDSS producer (502, 606, 702, 802, 902,1002) and a PDSS consumer (504, 608, 704, 804, 904, 1004), the streaming connection containing at least one stream;
after the streaming connection is established, support:
a getStreamInfo operation to get information for one or more streams of the streaming connection from the PDSS consumer (504, 608, 704, 804, 904, 1004),
an addStreamInfo operation to add information for one or more streams to the streaming connection to the PDSS consumer (504, 608, 704, 804, 904, 1004), or
an updateStreamInfo operation to update information for one or more streams of the streaming connection to the PDSS consumer (504, 608, 704, 804, 904, 1004), or
a deleteStreamInfo operation to delete information for one or more streams from the streaming connection to the PDSS consumer (504, 608, 704, 804, 904, 1004);
send a getStreamInfo request to support the get Stream Info operation, the get Stream Info request having a list of identifiers for which information for each of one or more streams to be returned; and
receive a getStreamInfo response to the getStreamInfo request, the get Stream Info response indicating a status of failure of the getStreamInfo operation for one or more of the identifiers and an indication that the failure is because the one or more identifiers being unknown.

2. The apparatus of claim 1, wherein the processing circuitry is further configured to receive a getStreamInfo response to the get Stream Info request, the get Stream Info response having, for each of the one or more streams successfully returned:
a unique identifier of the stream,
a domain name of a measured object instance, and
a list of measurement type.

3. The apparatus of claim 1, wherein the processing circuitry is further configured to send an addStreamInfo request to support the addStreamInfo operation, the addStreamInfo request having a list of information to be added, the list comprising, for each of stream to be added:
a unique identifier of the stream,
a domain name of a measured object instance, and
a list of measurement type whose measurement result values are to be reported by performance data stream units via the stream.

4. The apparatus of claim 3, wherein the processing circuitry is further configured to receive an addStreamInfo response to the addStreamInfo request, the addStreamInfo response having, for each of the one or more streams successfully added:
the unique identifier of the stream,
the domain name of the measured object instance, and
the list of measurement type.

5. The apparatus of claim 3, wherein the processing circuitry is further configured to receive an addStreamInfo response to the addStreamInfo request, the addStreamInfo response indicating a status of failure of the addStreamInfo operation for one or more of the identifiers and an indication that the failure is because the one or more identifiers already exists.

6. The apparatus of claim 1, wherein the processing circuitry is further configured to:
send an updateStreamInfo request to support the updateStreamInfo operation, the updateStreamInfo request having a list of identifiers for each of one or more streams to be updated and a list of information to be updated for each identifier, the list of information comprising:
an updated domain name of a measured object instance, and
an updated list of measurement type whose measurement result values are to be reported by performance data stream units via the stream; and
receive a updateStreamInfo response to the updateStreamInfo request, the updateStreamInfo response having, for each of the one or more streams successfully updated:
the unique identifier of the stream,
the domain name of the measured object instance, and
the list of measurement type.

7. The apparatus of claim 6, wherein an empty value for the updated domain name indicates no update to the updated domain name and an empty value for the updated list of measurement type indicates no update to the updated list of measurement type, at least one of the updated domain name or the updated list of measurement type is non-empty.

8. The apparatus of claim 6, wherein the processing circuitry is further configured to receive a updateStreamInfo response to the updateStreamInfo request, the updateStreamInfo response indicating a status of failure of the updateStreamInfo operation for one or more of the identifiers and an indication that the failure is because the one or more identifiers are unknown.

9. The apparatus of claim 1, wherein the processing circuitry is further configured to send a deleteStreamInfo request to support the deleteStreamInfo operation, the deleteStreamInfo request having an identifier of a stream to be deleted.

10. The apparatus of claim 9, wherein the processing circuitry is further configured to receive a deleteStreamInfo response to the deleteStreamInfo request, the deleteStreamInfo response indicating whether the deleteStreamInfo operation was a success or a failure.

11. The apparatus of claim 9, wherein the processing circuitry is further configured to receive a deleteStreamInfo response to the deleteStreamInfo request, the deleteStreamInfo response indicating a status of failure of the deleteStreamInfo operation and an indication that the failure is because the identifier is unknown.

12. The apparatus of claim 1, wherein:
the streaming connection contains at least two streams,
the processing circuitry is further configured to support:
a getStreamInfo operation to obtain stream information about two or more streams of the streaming connection,
an addStreamInfo operation to add two or more streams to the streaming connection,
an updateStreamInfo operation to update information for two or more streams of the streaming connection, or
a deleteStreamInfo operation to remove two or more streams from the streaming connection, and
the memory is configured to store the establish streaming connection request.

13. A computer-readable storage medium that stores instructions for execution by one or more processors configured to operate as a performance data streaming service, PDSS, producer (502, 606, 702, 802, 902,1002) in a new radio, NR, network, the instructions when executed configure the one or more processors to:
establish a streaming connection between the PDSS producer (502, 606, 702, 802, 902,1002) and the PDSS consumer (504, 608, 704, 804, 904, 1004), the streaming connection containing at least one stream;
after the streaming connection is established, support:
a getStreamInfo operation to get information for one or more streams of the streaming connection from the PDSS consumer (504, 608, 704, 804, 904, 1004),
an addStreamInfo operation to add information for one or more streams to the streaming connection to the PDSS consumer (504, 608, 704, 804, 904, 1004), or
an updateStreamInfo operation to update information for one or more streams of the streaming connection to the PDSS consumer (504, 608, 704, 804, 904, 1004), or
a deleteStreamInfo operation to delete information for one or more streams from the streaming connection to the PDSS consumer (504, 608, 704, 804, 904, 1004);
send a getStreamInfo request to support the getStreamInfo operation, the get Stream Info request having a list of identifiers for which information for each of one or more streams to be returned; and
receive a getStreamInfo response to the getStreamInfo request, the get Stream Info response indicating a status of failure of the getStreamInfo operation for one or more of the identifiers and an indication that the failure is because the one or more identifiers being unknown.

## Patentansprüche

1. Vorrichtung für ein neues Funk-(New Radio, NR)-Netzwerk, wobei die Vorrichtung Folgendes umfasst:
eine Verarbeitungsschaltung; und einen Speicher, wobei die Verarbeitungsschaltung die Aufgabe hat, die Vorrichtung so auszubilden, dass sie als Leistungsdaten-Streaming-Dienst-(PDSS)-Produzent (502, 606, 702, 802, 902, 1002) arbeitet, wobei die Verarbeitungsschaltung für Folgendes ausgebildet ist:
Herstellen einer Streaming-Verbindung zwischen dem PDSS-Produzenten (502, 606, 702, 802, 902, 1002) und einem PDSS-Konsumenten (504, 608, 704, 804, 904, 1004), wobei die Streaming-Verbindung mindestens einen Stream enthält;
nachdem die Streaming-Verbindung hergestellt ist, Folgendes zu unterstützen:
eine getStreamInfo-Operation, um Informationen für einen oder mehrere Streams der Streaming-Verbindung vom PDSS-Verbraucher (504, 608, 704, 804, 904, 1004) zu erhalten,
eine addStreamInfo-Operation zum Hinzufügen von Informationen für einen oder mehrere Streams zur Streaming-Verbindung zum PDSS-Konsumenten (504, 608, 704, 804, 904, 1004), oder
eine updateStreamInfo-Operation, um Informationen für einen oder mehrere Streams der Streaming-Verbindung zum PDSS-Konsumenten zu aktualisieren (504, 608, 704, 804, 904, 1004), oder
eine deleteStreamInfo-Operation zum Löschen von Informationen für einen oder mehrere Streams aus der Streaming-Verbindung zum PDSS-Konsumenten (504, 608, 704, 804, 904, 1004);
Senden einer getStreamInfo-Anfrage zur Unterstützung der getStreamInfo-Operation, wobei die getStreamInfo-Anfrage eine Liste von Identifikatoren enthält, für die Informationen für jeden von einem oder mehreren Streams zurückgegeben werden sollen; und
Empfangen einer getStreamInfo-Antwort auf die getStreamInfo-Anfrage, wobei die getStreamInfo-Antwort einen Status des Scheiterns der getStreamInfo-Operation für einen oder mehrere der Identifikatoren und eine Angabe angibt, dass das Scheitern darauf zurückzuführen ist, dass der eine oder die mehreren Identifikatoren unbekannt sind.

2. Vorrichtung nach Anspruch 1, wobei die Verarbeitungsschaltung ferner ausgebildet ist, um eine getStreamInfo-Antwort auf die getStreamInfo-Anfrage zu empfangen, wobei die getStreamInfo-Antwort für jeden der einen oder mehreren erfolgreich zurückgegebenen Streams Folgendes enthält:
einen eindeutigen Identifikator des Streams,
einen Domänennamen einer gemessenen Objektinstanz, und
eine Liste der Messungsarten.

3. Vorrichtung nach Anspruch 1, wobei die Verarbeitungsschaltung ferner ausgebildet ist, eine addStreamInfo-Anfrage zu senden, um die addStreamInfo-Operation zu unterstützen, wobei die addStreamInfo-Anfrage eine Liste von hinzuzufügenden Informationen enthält, wobei die Liste für jeden hinzuzufügenden Stream Folgendes umfasst:
einen eindeutigen Identifikator des Streams,
einen Domänennamen einer gemessenen Objektinstanz, und
eine Liste der Messungsarten, deren Messergebniswerte von den Einheiten des Leistungsdatenstroms über den Datenstrom gemeldet werden sollen.

4. Vorrichtung nach Anspruch 3, wobei die Verarbeitungsschaltung ferner ausgebildet ist, eine addStreamInfo-Antwort auf die addStreamInfo-Anfrage zu empfangen, wobei die addStreamInfo-Antwort für jeden der ein oder mehreren erfolgreich hinzugefügten Streams Folgendes enthält:
den eindeutigen Identifikator des Streams,
den Domänennamen der gemessenen Objektinstanz, und
die Liste der Messungsarten.

5. Vorrichtung nach Anspruch 3, wobei die Verarbeitungsschaltung ferner ausgebildet ist, um eine addStreamInfo-Antwort auf die addStreamInfo-Anfrage zu empfangen, wobei die addStreamInfo-Antwort einen Status des Scheiterns der addStreamInfo-Operation für einen oder mehrere der Identifikatoren und eine Angabe angibt, dass das Scheitern darauf zurückzuführen ist, dass der eine oder die mehreren Identifikatoren bereits existieren.

6. Vorrichtung nach Anspruch 1, wobei die Verarbeitungsschaltung ferner für Folgendes ausgebildet ist: Senden einer updateStreamInfo-Anfrage, um die updateStreamInfo-Operation zu unterstützen, wobei die updateStreamInfo-Anfrage eine Liste von Identifikatoren für jeden von einem oder mehreren zu aktualisierenden Streams und eine Liste von zu aktualisierenden Informationen für jeden Identifikator enthält, wobei die Liste der Informationen Folgendes umfasst:
einen aktualisierten Domänennamen einer gemessenen Objektinstanz, und
eine aktualisierte Liste von Messungsarten, deren Messergebniswerte von Leistungsdatenstromeinheiten über den Datenstrom gemeldet werden sollen; und
Empfangen einer updateStreamInfo-Antwort auf die updateStreamInfo-Anfrage, wobei die updateStreamInfo-Antwort für jeden der ein oder mehreren erfolgreich aktualisierten Streams Folgendes enthält:
den eindeutigen Identifikator des Streams,
den Domänennamen der gemessenen Objektinstanz, und
die Liste der Messungsarten.

7. Vorrichtung nach Anspruch 6, wobei ein leerer Wert für den aktualisierten Domänennamen angibt, dass der aktualisierte Domänenname nicht aktualisiert wurde, und ein leerer Wert für die aktualisierte Liste der Messungsarten angibt, dass die aktualisierte Liste der Messungsarten nicht aktualisiert wurde, wobei mindestens entweder der aktualisierte Domänenname oder die aktualisierte Liste der Messungsarten nicht leer ist.

8. Vorrichtung nach Anspruch 6, wobei die Verarbeitungsschaltung ferner ausgebildet ist, um eine updateStreamInfo-Antwort auf die updateStreamInfo-Anfrage zu empfangen, wobei die updateStreamInfo-Antwort einen Status des Scheiterns der updateStreamInfo-Operation für einen oder mehrere der Identifikatoren und eine Angabe angibt, dass das Scheitern darauf zurückzuführen ist, dass der eine oder die mehreren Identifikatoren unbekannt sind.

9. Vorrichtung nach Anspruch 1, wobei die Verarbeitungsschaltung ferner ausgebildet ist, eine deleteStreamInfo-Anfrage zu senden, um die deleteStreamInfo-Operation zu unterstützen, wobei die deleteStreamInfo-Anfrage einen Identifikator eines zu löschenden Streams aufweist.

10. Vorrichtung nach Anspruch 9, wobei die Verarbeitungsschaltung ferner ausgebildet ist, um eine deleteStreamInfo-Antwort auf die deleteStreamInfo-Anfrage zu empfangen, wobei die deleteStreamInfo-Antwort angibt, ob die deleteStreamInfo-Operation ein Erfolg oder ein Fehlschlag war.

11. Vorrichtung nach Anspruch 9, wobei die Verarbeitungsschaltung ferner ausgebildet ist, um eine deleteStreamInfo-Antwort auf die deleteStreamInfo-Anfrage zu empfangen, wobei die deleteStreamInfo-Antwort einen Status des Scheiterns der deleteStreamInfo-Operation und eine Angabe, dass das Scheitern daran liegt, dass der Identifikator unbekannt ist, angibt.

12. Vorrichtung nach Anspruch 1, wobei:
die Streaming-Verbindung mindestens zwei Streams enthält,
die Verarbeitungsschaltung ferner ausgebildet ist, um Folgendes zu unterstützen:
eine getStreamInfo-Operation, um Stream-Informationen über zwei oder mehr Streams der Streaming-Verbindung zu erhalten,
eine addStreamInfo-Operation, um zwei oder mehr Streams zu der Streaming-Verbindung hinzuzufügen,
eine updateStreamInfo-Operation, um Informationen für zwei oder mehr Streams der Streaming-Verbindung zu aktualisieren, oder
eine deleteStreamInfo-Operation, um zwei oder mehr Streams von der Streaming-Verbindung zu entfernen, und
der Speicher ausgebildet ist, um die Anfrage zum Herstellen einer Streaming-Verbindung zu speichern.

13. Computerlesbares Speichermedium, das Anweisungen für die Ausführung durch einen oder mehrere Prozessoren speichert, die ausgebildet sind, um als Leistungsdaten-Streaming-Dienst-(PDSS)-Produzent (502, 606, 702, 802, 902, 1002) in einem neuen Funk-(NR)-Netzwerk zu arbeiten, wobei die Anweisungen, wenn sie ausgeführt werden, den einen oder die mehreren Prozessoren für Folgendes ausbilden:
Herstellen einer Streaming-Verbindung zwischen dem PDSS-Produzenten (502, 606, 702, 802, 902, 1002) und dem PDSS-Konsumenten (504, 608, 704, 804, 904, 1004), wobei die Streaming-Verbindung mindestens einen Stream enthält;
nachdem die Streaming-Verbindung hergestellt ist, Folgendes zu unterstützen:
eine getStreamInfo-Operation, um Informationen für einen oder mehrere Streams der Streaming-Verbindung vom PDSS-Verbraucher (504, 608, 704, 804, 904, 1004) zu erhalten,
eine addStreamInfo-Operation zum Hinzufügen von Informationen für einen oder mehrere Streams zur Streaming-Verbindung zum PDSS-Konsumenten (504, 608, 704, 804, 904, 1004), oder
eine updateStreamInfo-Operation, um Informationen für einen oder mehrere Streams der Streaming-Verbindung zum PDSS-Konsumenten zu aktualisieren (504, 608, 704, 804, 904, 1004), oder
eine deleteStreamInfo-Operation zum Löschen von Informationen für einen oder mehrere Streams aus der Streaming-Verbindung zum PDSS-Konsumenten (504, 608, 704, 804, 904, 1004);
Senden einer getStreamInfo-Anfrage zur Unterstützung der getStreamInfo-Operation, wobei die getStreamInfo-Anfrage eine Liste von Identifikatoren enthält, für die Informationen für jeden von einem oder mehreren Streams zurückgegeben werden sollen; und
Empfangen einer getStreamInfo-Antwort auf die getStreamInfo-Anfrage, wobei die getStreamInfo-Antwort einen Status des Scheiterns der getStreamInfo-Operation für einen oder mehrere der Identifikatoren und eine Angabe angibt, dass das Scheitern darauf zurückzuführen ist, dass der eine oder die mehreren Identifikatoren unbekannt sind.

## Revendications

1. Appareil pour un réseau New Radio, NR, l'appareil comprenant :
des circuits de traitement ; et une mémoire, les circuits de traitement configurant l'appareil pour qu'il fonctionne comme un producteur de service de diffusion en continu de données de performance, PDSS, (502, 606, 702, 802, 902, 1002), les circuits de traitement étant configurés pour :
établir une connexion de diffusion en continu entre le producteur PDSS (502, 606, 702, 802, 902, 1002) et un consommateur PDSS (504, 608, 704, 804, 904, 1004), la connexion de diffusion en continu contenant au moins un flux ;
après l'établissement de la connexion de diffusion en continu, prendre en charge :
une opération getStreamInfo pour obtenir des informations sur un ou plusieurs flux de la connexion de diffusion en continu auprès du consommateur PDSS (504, 608, 704, 804, 904, 1004),
une opération addStreamInfo pour ajouter des informations sur un ou plusieurs flux à la connexion de diffusion en continu vers le consommateur PDSS (504, 608, 704, 804, 904, 1004), ou
une opération updateStreamInfo pour mettre à jour les informations relatives à un ou plusieurs flux de la connexion de diffusion en continu vers le consommateur PDSS (504, 608, 704, 804, 904, 1004), ou
une opération deleteStreamInfo pour supprimer les informations relatives à un ou plusieurs flux de la connexion de diffusion en continu vers le consommateur PDSS (504, 608, 704, 804, 904, 1004) ;
envoyer une demande getStreamInfo pour prendre en charge l'opération getStreamInfo, la demande getStreamInfo comportant une liste d'identifiants pour lesquels des informations doivent être renvoyées pour chacun d'un ou plusieurs flux ; et
recevoir une réponse getStreamInfo à la demande getStreamInfo, la réponse getStreamInfo indiquant un état d'échec de l'opération getStreamInfo pour un ou plusieurs des identifiants et une indication que l'échec est dû au fait que les un ou plusieurs identifiants sont inconnus.

2. Appareil selon la revendication 1, dans lequel les circuits de traitement sont en outre configurés pour recevoir une réponse getStreamInfo à la demande getStreamInfo, la réponse getStreamInfo comportant, pour chacun des un ou plusieurs flux renvoyés avec succès :
un identifiant unique du flux,
un nom de domaine d'une instance d'objet mesuré, et
une liste de types de mesures.

3. Appareil selon la revendication 1, dans lequel les circuits de traitement sont en outre configurés pour envoyer une demande addStreamInfo afin de prendre en charge l'opération addStreamInfo, la demande addStreamInfo comportant une liste d'informations à ajouter, la liste comprenant, pour chaque flux à ajouter :
un identifiant unique du flux,
un nom de domaine d'une instance d'objet mesuré, et
une liste de types de mesures dont les valeurs de résultats de mesure doivent faire l'objet d'un compte-rendu par des unités de flux de données de performances par l'intermédiaire du flux.

4. Appareil selon la revendication 3, dans lequel les circuits de traitement sont en outre configurés pour recevoir une réponse addStreamInfo à la demande addStreamInfo, la réponse addStreamInfo comportant, pour chacun des un ou plusieurs flux ajoutés avec succès :
l'identifiant unique du flux,
le nom de domaine de l'instance de l'objet mesuré, et
la liste des types de mesures.

5. Appareil selon la revendication 3, dans lequel les circuits de traitement sont en outre configurés pour recevoir une réponse addStreamInfo à la demande addStreamInfo, la réponse addStreamInfo indiquant un état d'échec de l'opération addStreamInfo pour un ou plusieurs des identifiants et une indication que l'échec est dû au fait que les un ou plusieurs identifiants existent déjà.

6. Appareil selon la revendication 1, dans lequel les circuits de traitement sont en outre configurés pour :
envoyer une demande updateStreamInfo pour prendre en charge l'opération updateStreamInfo, la demande updateStreamInfo comportant une liste d'identifiants pour chacun d'un ou plusieurs flux à mettre à jour et une liste d'informations à mettre à jour pour chaque identifiant, la liste d'informations comprenant :
un nom de domaine mis à jour d'une instance d'objet mesuré, et
une liste de types de mesures mises à jour dont les valeurs de résultats de mesure doivent faire l'objet d'un compte-rendu par des unités de flux de données de performances par l'intermédiaire du flux ; et
recevoir une réponse updateStreamInfo à la demande updateStreamInfo, la réponse updateStreamInfo comportant, pour chacun des un ou plusieurs flux mis à jour avec succès :
l'identifiant unique du flux,
le nom de domaine de l'instance de l'objet mesuré, et
la liste des types de mesures.

7. Appareil selon la revendication 6, dans lequel une valeur vide pour le nom de domaine mis à jour indique l'absence de mise à jour du nom de domaine mis à jour et une valeur vide pour la liste de types de mesures mise à jour indique l'absence de mise à jour de la liste mise à jour de types de mesures, l'un au moins du nom de domaine mis à jour ou de la liste mise à jour de types de mesures n'étant pas vide.

8. Appareil selon la revendication 6, dans lequel les circuits de traitement sont en outre configurés pour recevoir une réponse updateStreamInfo à la demande updateStreamInfo, la réponse updateStreamInfo indiquant un état d'échec de l'opération updateStreamInfo pour un ou plusieurs des identifiants et une indication que l'échec est dû au fait que les un ou plusieurs identifiants sont inconnus.

9. Appareil selon la revendication 1, dans lequel les circuits de traitement sont en outre configurés pour envoyer une demande deleteStreamInfo afin de prendre en charge l'opération deleteStreamInfo, la demande deleteStreamInfo comportant un identifiant d'un flux à supprimer.

10. Appareil selon la revendication 9, dans lequel les circuits de traitement sont en outre configurés pour recevoir une réponse deleteStreamInfo à la demande deleteStreamInfo, la réponse deleteStreamInfo indiquant si l'opération deleteStreamInfo a été un succès ou un échec.

11. Appareil selon la revendication 9, dans lequel les circuits de traitement sont en outre configurés pour recevoir une réponse deleteStreamInfo à la demande deleteStreamInfo, la réponse deleteStreamInfo indiquant un état d'échec de l'opération deleteStreamInfo et une indication que l'échec est dû au fait que l'identifiant est inconnu.

12. Appareil selon la revendication 1, dans lequel :
la connexion de diffusion en continu contient au moins deux flux, les circuits de traitement sont en outre configurés pour prendre en charge :
une opération getStreamInfo pour obtenir des informations de diffusion sur deux flux, ou davantage, de la connexion de diffusion en continu,
une opération addStreamInfo pour ajouter deux flux, ou davantage, à la connexion de diffusion en continu,
une opération updateStreamInfo pour mettre à jour les informations relatives à deux flux, ou davantage, de la connexion de diffusion en continu, ou
une opération deleteStreamInfo pour supprimer deux flux, ou davantage, de la connexion de diffusion en continu, et
la mémoire est configurée pour stocker la demande d'établissement de connexion de diffusion en continu.

13. Support de stockage lisible par ordinateur qui stocke des instructions destinées à être exécutées par un ou plusieurs processeurs configurés pour fonctionner en tant que producteur de service de diffusion en continu de données de performances, PDSS, (502, 606, 702, 802, 902, 1002) dans un réseau New Radio, NR, les instructions, lorsqu'elles sont exécutées, configurant les un ou plusieurs processeurs pour :
établir une connexion de diffusion en continu entre le producteur PDSS (502, 606, 702, 802, 902, 1002) et le consommateur PDSS (504, 608, 704, 804, 904, 1004), la connexion de diffusion en continu contenant au moins un flux ;
après l'établissement de la connexion de diffusion en continu, prendre en charge :
une opération getStreamInfo pour obtenir des informations sur un ou plusieurs flux de la connexion de diffusion en continu auprès du consommateur PDSS (504, 608, 704, 804, 904, 1004),
une opération addStreamInfo pour ajouter des informations sur un ou plusieurs flux à la connexion de diffusion en continu vers le consommateur PDSS (504, 608, 704, 804, 904, 1004), ou
une opération updateStreamInfo pour mettre à jour les informations relatives à un ou plusieurs flux de la connexion de diffusion en continu vers le consommateur PDSS (504, 608, 704, 804, 904, 1004), ou
une opération deleteStreamInfo pour supprimer les informations relatives à un ou plusieurs flux de la connexion de diffusion en continu vers le consommateur PDSS (504, 608, 704, 804, 904, 1004) ;
envoyer une demande getStreamInfo pour prendre en charge l'opération getStreamInfo, la demande getStreamInfo comportant une liste d'identifiants pour lesquels des informations doivent être renvoyées pour chacun d'un ou plusieurs flux ; et
recevoir une réponse getStreamInfo à la demande getStreamInfo, la réponse getStreamInfo indiquant un état d'échec de l'opération getStreamInfo pour un ou plusieurs des identifiants et une indication que l'échec est dû au fait que les un ou plusieurs identifiants sont inconnus.
